# EUROPÄISCHE PATENTSCHRIFT

(11) **EP 4 264 762 B1**
(45) Veröffentlichungstag und Bekanntmachung des Hinweises auf die Patenterteilung: **21.10.2026**
(21) Anmeldenummer: 21834717.7
(22) Anmeldetag: 10.12.2021
(51) Int. Cl.: H02G 3/08, H02G 3/12, H02G 3/14, H02G 3/18

(54) **EINBAUGEHÄUSE; VERFAHREN ZUR BEDIENUNG EINES EINBAUGEHÄUSES**
INSTALLATION HOUSING AND METHOD FOR OPERATING AN INSTALLATION HOUSING
BOÎTIER ENCASTRABLE ET PROCÉDÉ D'UTILISATION D'UN BOÎTIER ENCASTRABLE

(30) Priorität: 21.12.2020 DE 102020134474; 08.02.2021 DE 102021102878; 08.02.2021 DE 102021102883; 12.03.2021 DE 102021106039
(43) Veröffentlichungstag der Anmeldung: 25.10.2023
(73) Patentinhaber: Bachmann GmbH, 70565 Stuttgart (DE)
(72) Erfinder: THALER, Roland, 72379 Hechingen (DE); BACHMANN, Peter, 70192 Stuttgart (DE)
(74) Vertreter: Patentanwälte Schuster, Müller & Partner mbB
(86) Internationale Anmeldenummer: PCT/DE2021/100993
(87) Internationale Veröffentlichungsnummer: WO 2022/135631

(56) Entgegenhaltungen:
- DE-A1- 102013 000 829
- DE-A1- 102018 009 948
- DE-B4- 102007 063 585
- DE-B4- 102012 025 533
- DE-U1- 202015 103 222

## Beschreibung

### Stand der Technik

Die Erfindung geht aus von einem Einbaugehäuse, nach der Gattung des Anspruchs 1, insbesondere einem Einbaugehäuse für eine Arbeitsplatte, und einem Verfahren zur Bedienung eines Einbaugehäuses, nach der Gattung des Anspruchs 17, insbesondere einem Einbaugehäuse für eine Arbeitsplatte.

Dosengehäuse gibt es in vielfältigen Ausführungen. So sind aus dem Stand der Technik insbesondere Mehrfachsteckdosengehäuse für kabelgebundene Mehrfachsteckdosen, Aufputzdosengehäuse und Einbaugehäuse, die zum Einbau in eine Wand, einen Boden, eine Decke und/oder ein Möbel, nämlich beispielsweise in eine Arbeitsplatte, insbesondere in eine Küchenarbeitsplatte, verwendet werden, bekannt. Dosengehäuse können unterschiedlich bestückt sein, sodass sie mindestens eine Steckdose, mindestens ein Informationsanschluss und/oder mindestens ein Schalter aufweisen können. Auch bei den Steckdosen gibt es unterschiedliche Ausführungsformen, so dass Steckdosen mit erhöhtem Berührschutz oder mit einer Steckereinführhilfe, durch die ein Einstecken des Steckers in die Steckdose erleichtert wird, da die richtige Einsteckposition durch ein Einführen des Steckers in den Steckdosentopf und ein Verdrehen des Steckers innerhalb des Steckdosentopf bis die Kontaktstifte des Steckers in den Kontaktöffnungen der Steckdose verrasten ermittelbar ist, vorbekannt sind.

Diese Steckdosengehäuse und insbesondere die Einbaugehäuse, die auch als Einbausteckdosen bezeichnet werden und die beispielsweise in eine Küchenplatte eingebaut werden, haben den Nachteil, dass in dem nach oben gerichteten Dosentopf Schmutz, Fremdkörper oder Feuchtigkeit eindringen könnte, falls kein Stecker in der Dose eingesteckt sein sollte.

Daher wird in der Offenlegungsschrift DE 10 2004 051 064 A1 eine Vorrichtung vorgeschlagen, die zur Aufnahme mindestens eines Steckdoseneinsatzes dient und mit einem Deckel verschließbar ist. Nachteilig ist, dass der Deckel jederzeit geöffnet werden kann und nicht dichtend schließt.

In der Offenlegungsschrift DE 24 58 243 A1 wird eine Schutzvorrichtung für Installationselemente, insbesondere elektrische Installationselemente, wie Steckdosen, Schalter odgl., beschrieben. Die Schutzvorrichtung weist eine Abdeck-Klappe auf, durch die die Installationselemente unzugänglich verdeckt werden. An der Abdeck-Klappe ist eine verdrehbare Deckelplatte angeordnet, die einen Sicherheitsriegel aufweist, durch den das Öffnen der Abdeck-Klappe nur in einer bestimmten Stellung ermöglicht wird. Nachteilig ist, dass die Abdeck-Klappe zum Öffnen nach oben geschwenkt wird, so dass sie, da sie in der Öffnungsposition über die übrigen Bauteile vorsteht, gegebenenfalls im geöffneten Zustand stört.

In der Patentschrift DE 10 2007 063 585 B4 wird eine Steckdose beschrieben, die einen in ein Frontelement integrierten Verschluss aufweist, der aus mehreren Verschlusselementen besteht. Die Verschlusselemente sind über ein Festlager bewegbar angeordnet, wobei die Bewegung radial ein- oder auswärts gegenüber dem Mittelpunkt des Frontelementes erfolgt. Vorteilhaft ist, dass dadurch das Frontelement sehr flach bauend ausgestaltet werden kann. Nachteilig ist allerdings der konstruktive Aufwand zu bewerten.

Konstruktiv aufwändig sind auch die in der Gebrauchsmusterschrift DE 202 09 189 U1, Patentschrift US 6 542 218 B1, der Gebrauchsmusterschrift DE 20 2015 103 222 U1 und der Gebrauchsmusterschrift DE 93 15 394 U1 beschriebenen verschließbaren Steckdosen.

Aus der Patentschrift DE 10 2012 025 533 B4 und der Offenlegungsschrift DE 10 2018 009 948 A1 sind Einbaugehäuse bekannt, die zur Freigabe von Steckdosen einen mittig zwischen den verschließbaren Steckdosen angeordneten Betätigungsknopf einer Bedieneinrichtung, aufweisen. Nachteilig ist hierbei, dass durch die nach oben gerichtete Anordnung eine Beeinträchtigung der Funktionsweise aber nicht ausgeschlossen werden kann, da Staub oder Flüssigkeit entlang des Betätigungsknopfes in das Gehäuseinnere gelangen könnte. Aufgrund des mittig angeordneten Betätigungsknopfes ist zudem eine erhöhte Aufmerksamkeit des Anwenders notwendig, um eine sichere Bedienung zu gewährleisten.

Aus der Offenlegungsschrift DE 10 2013 000 829 A1 ist eine Kabeldose bekannt, die eine Öffnung zur Durchführung von Kabeln und eine Blende zur Verstellung der Öffnungsweite der Öffnung aufweist, wobei die Blende ein Betätigungselement und mehrere drehbar gelagerte Lamellen zur Einstellung der Öffnungsweite aufweist, wobei die Lamellen mit dem Betätigungselement gekoppelt sind und bei Bewegung des Betätigungselements gedreht werden. Nachteilig ist hierbei der konstruktive Aufwand zu beurteilen.

Der Erfindung liegt daher die Aufgabe zugrunde, eine die Nachteile des Standes der Technik überwindendes Einbaugehäuse und ein die Nachteile des Standes der Technik überwindendes Verfahren zur Bedienung eines Einbaugehäuses bereitzustellen.

### Die Erfindung und ihre Vorteile

Das erfindungsgemäße Einbaugehäuse, mit den Merkmalen des Anspruchs 1, und das erfindungsgemäße Verfahren zur Bedienung eines Einbaugehäuses, mit den Merkmalen des Anspruchs 17, haben demgegenüber den Vorteil, dass das erfindungsgemäße Einbaugehäuse, das insbesondere zum Einbau in ein Möbel, eine Wand, einen Boden und/oder eine Decke geeignet ist, ein mindestens teilweise geschlossenes Gehäuse, das eine eine Außenseite aufweisende Gehäusewandung und eine die Außenseite nicht überragende Abdeckung oder eine die Außenseite zumindest stellenweise überragende Abdeckung aufweist, wobei das Gehäuse mindestens einen Innenraum aufweist, der durch die Gehäusewandung zugänglich und von der Abdeckung abgedeckt ist, wobei die Abdeckung eine dem Innenraum abgewandte Oberseite und mindestens eine durch einen Verschluss verschließbare Öffnung aufweist, wobei mindestens ein Verschluss direkt oder indirekt mittels einer Bedienvorrichtung aus einer Verschlussstellung in eine Offenstellung bzw. aus einer Offenstellung in eine Verschlussstellung bewegbar ist, wobei mindestens ein Verschluss direkt oder indirekt durch eine Bedienvorrichtung, die zumindest teilweise außerhalb der Gehäusewandung des Gehäuses angeordnet ist, aus der Verschlussstellung in die Offenstellung bzw. aus der Offenstellung in die Verschlussstellung bewegbar ist, wobei ein in der Verschlussstellung befindlicher Verschluss zumindest teilweise innerhalb der durch den Verschluss verschließbaren Öffnung angeordnet ist, und/oder mehrere Verschlüsse durch eine gemeinsame Bedienvorrichtung, die zumindest teilweise außerhalb der Gehäusewandung des Gehäuses angeordnet ist, direkt und/oder indirekt aus der Verschlussstellung in die Offenstellung bzw. aus der Offenstellung in die Verschlussstellung bewegbar sind, wobei ein in der Verschlussstellung befindlicher Verschluss zumindest teilweise innerhalb der durch den Verschluss verschließbaren Öffnung angeordnet ist, und/oder mehrere Verschlüsse durch mindestens zwei Bedienvorrichtungen, von denen mindestens eine Bedienvorrichtung zumindest teilweise außerhalb des Gehäuses angeordnet ist, direkt und/oder indirekt aus der Verschlussstellung in die Offenstellung bzw. aus der Offenstellung in die Verschlussstellung bewegbar sind, wobei ein in der Verschlussstellung befindlicher Verschluss zumindest teilweise innerhalb der durch den Verschluss verschließbaren Öffnung angeordnet ist, wobei eine Bedienvorrichtung, die zumindest teilweise außerhalb des Gehäuses angeordnet ist, über die Außenseite der Gehäusewandung radial hervorsteht und/oder über die Oberseite der Abdeckung hervorsteht und/oder eine Bedienvorrichtung, die zumindest teilweise außerhalb des Gehäuses angeordnet ist, zumindest ein Teil der Abdeckung, der die Außenseite der Gehäusewandung zumindest stellenweise radial überragt, und/oder eine Bedienvorrichtung, die zumindest teilweise außerhalb des Gehäuses angeordnet ist, radial die Außenseite der Gehäusewandung überragend an der Abdeckung angeordnet ist, wodurch aufgrund mindestens einer Bedienvorrichtung, die zumindest teilweise außerhalb des Gehäuses angeordnet ist, der Anspruch an die Aufmerksamkeit des Anwenders bzgl. einer sicheren Bedienung reduziert ist. Bevorzugt haben das erfindungsgemäße Einbaugehäuse und das erfindungsgemäße Verfahren zur Bedienung eines Einbaugehäuses gegenüber dem vorbekannten Stand der Technik den Vorteil, dass bei dem erfindungsgemäßen Einbaugehäuse mindestens ein, bevorzugt entfernt von den Steckdosen angeordnetes Bedienelement der Bedienvorrichtung zum Einsatz kommt, das insbesondere durch seine Anordnung eine für den Anwender sichere Handhabung gewährleistet, und das erfindungsgemäße Einbaugehäuse zudem noch einen verbesserten Schutz gegen das Eindringen von Staub oder Flüssigkeit bietet.

Nach einer vorteilhaften Ausgestaltung des erfindungsgemäßen Einbaugehäuses weist mindestens eine Öffnung eine die Öffnung verschließende Sperrstellung und eine die Öffnung freigebende Freigabestellung auf.

Nach einer zusätzlichen vorteilhaften Ausgestaltung des erfindungsgemäßen Einbaugehäuses weist mindestens ein Verschluss und/oder mindestens eine Bedienvorrichtung eine Feder auf. Mindestens ein Verschluss und/oder mindestens eine Bedienvorrichtung ist somit federbelastet.

Nach einer zusätzlichen vorteilhaften Ausgestaltung des erfindungsgemäßen Einbaugehäuses ist in mindestens einem Innenraum mindestens eine Steckdose, mindestens ein Informationsanschluss odgl. und/oder mindestens ein Schalter und/oder ein Steckdosengehäuse, das mindestens eine Steckdose, mindestens einen Informationsanschluss odgl. und/oder mindestens einen Schalter aufweist, untergebracht.

Nach einer zusätzlichen vorteilhaften Ausgestaltung des erfindungsgemäßen Einbaugehäuses ist in mindestens einem Innenraum ein Steckdosengehäuse, das mindestens eine Steckdose und/oder mindestens einen Informationsanschluss odgl. und/oder mindestens einen Schalter aufweist, untergebracht, wobei das Steckdosengehäuse eine Bedienvorrichtung aufweist.

Nach einer zusätzlichen vorteilhaften Ausgestaltung des erfindungsgemäßen Einbaugehäuses ist die Bedienvorrichtung eine zumindest teilweise außerhalb des Gehäuses angeordnete Bedienvorrichtung.

Nach einer zusätzlichen vorteilhaften Ausgestaltung des erfindungsgemäßen Einbaugehäuses ist die Abdeckung und/oder mindestens ein Verschluss und/oder ein Steckdosengehäuse in mindestens einer Drehrichtung um eine Drehachse drehbar. Bevorzugt ist eine Verdrehung erst dann möglich, wenn ein Verschluss aus der Verschlussstellung in die Offenstellung bzw. aus der Offenstellung in die Verschlussstellung gebracht wurde.

Nach einer diesbezüglichen vorteilhaften Ausgestaltung des erfindungsgemäßen Einbaugehäuses ist die Abdeckung und/oder mindestens einer der Verschlüsse und/oder das Steckdosengehäuse in eine Drehrichtung oder in beide Drehrichtungen manuell verdrehbar ist und/oder die Abdeckung und/oder mindestens einer der Verschlüsse und/oder das Steckdosengehäuse in eine Drehrichtung oder in beide Drehrichtungen automatisch verdrehbar. Denkbar ist auch, dass die Abdeckung und/oder mindestens ein Verschluss und/oder ein Steckdosengehäuse in eine Drehrichtung manuell und in die andere Drehrichtung automatisch verdrehbar ist.

Nach einer zusätzlichen vorteilhaften Ausgestaltung des erfindungsgemäßen Einbaugehäuses ist die Abdeckung und/oder mindestens einer der Verschlüsse und/oder das Steckdosengehäuse drehbar an der Gehäusewandung angeordnet.

Nach einer zusätzlichen vorteilhaften Ausgestaltung des erfindungsgemäßen Einbaugehäuses ist mindestens eine Drehachse auf mindestens einen Innenraum ausgerichtet. Bevorzugt ist mindestens eine Drehachse senkrecht auf mindestens einen Innenraum ausgerichtet.

Nach einer zusätzlichen vorteilhaften Ausgestaltung des erfindungsgemäßen Einbaugehäuses weist das Einbaugehäuse zur Begrenzung der Drehung der Abdeckung und/oder mindestens eines Verschlusses und/oder des Steckdosengehäuses mindestens einen Anschlag auf. Bevorzugt ist mindestens ein Anschlag an einer auf den Innenraum ausgerichteten Seite der Abdeckung oder an dem Gehäuse angeordnet.

Nach einer zusätzlichen vorteilhaften Ausgestaltung des erfindungsgemäßen Einbaugehäuses weist die Abdeckung auf ihrer dem Innenraum zugewandten Seite mindestens eine Vertiefung zur Aufnahme eines Verschlusses auf und/oder ist im Innenraum mindestens eine Vertiefung zur Aufnahme eines Verschlusses angeordnet.

Nach einer zusätzlichen vorteilhaften Ausgestaltung des erfindungsgemäßen Einbaugehäuses weist das Einbaugehäuse mindestens einen Antrieb auf, der die Drehbewegung der Abdeckung und/oder des mindestens einen Verschlusses und/oder des Steckdosengehäuses beim Öffnen und/oder beim Verschließen mindestens einer Öffnung in mindestens eine Drehrichtung unterstützt.

Nach einer diesbezüglichen vorteilhaften Ausgestaltung des erfindungsgemäßen Einbaugehäuses ist mindestens ein Antrieb ein Federmechanismus oder ein Elektroantrieb.

Nach einer zusätzlichen vorteilhaften Ausgestaltung des erfindungsgemäßen Einbaugehäuses ist mindestens ein Federmechanismus vor der Betätigung einer Bedienvorrichtung zumindest teilweise gespannt.

Nach einer zusätzlichen vorteilhaften Ausgestaltung des erfindungsgemäßen Einbaugehäuses ist der Federmechanismus zentral oder dezentral an der Gehäusewandung angeordnet.

Nach einer zusätzlichen vorteilhaften Ausgestaltung des erfindungsgemäßen Einbaugehäuses weist der Federmechanismus mindestens eine Feder und zusätzlich mindestens eine Federachse (Federhalterung), mindestens ein Kugellager, mindestens einen Rotationsdämpfer und/oder mindestens einen Federmechanismusdeckel auf.

Nach einer zusätzlichen vorteilhaften Ausgestaltung des erfindungsgemäßen Einbaugehäuses ist der Federmechanismus in eine Bedienvorrichtung integriert.

Nach einer zusätzlichen vorteilhaften Ausgestaltung des erfindungsgemäßen Einbaugehäuses weist der Federmechanismus eine Feder mit einen radialen und einen axialen Schenkel auf.

Nach einer zusätzlichen vorteilhaften Ausgestaltung des erfindungsgemäßen Einbaugehäuses weist der Federmechanismus eine Feder mit einen radialen und einen axialen Schenkel auf. Bevorzugt wird die Feder in einem Zylinder (Hülle, Käfig, Kartusche), der ein eigenes Bauteil oder ein Bestandteil der Bedienvorrichtung sein kann, gefasst, wobei der Zylinder einen Schenkel fixiert und den anderen beweglich lässt. Bevorzugt ist der radiale Schenkel der Feder dabei in einem Langloch (z. B. ca. 90°) beweglich, um den Antrieb zu gewährleisten. Über die Länge des Langlochs kann man den Anschlag steuern. Es sind also fast beliebige Winkel denkbar. Der axiale Schenkel wird im (evtl. ringförmigen) "Boden" durch eine Bohrung geführt und gehalten. Der Boden kann auch ein separates Teil sein, das man einklipst oder mit Schrauben fixiert. Zusätzlich könnte man durch einen inneren, zweiten Zylinder (Hülle, Käfig, Kartusche) die Feder stützen (z. B. gegen axiales Einknicken). Vorteilhaft ist, dass eine derart gekapselte Feder beim Einsetzen auf ein definiertes Drehmoment vorgespannt werden kann. Damit ist das Federelement auf ein definiertes Drehmoment vorgespannt und kann einfach und ungefährlich eingesetzt bzw. entnommen werden.

Nach einer zusätzlichen vorteilhaften Ausgestaltung des erfindungsgemäßen Einbaugehäuses weist der Federmechanismus mindestens eine Konstantkraftfeder oder mindestens eine Schraubenfeder auf.

Nach einer zusätzlichen vorteilhaften Ausgestaltung des erfindungsgemäßen Einbaugehäuses ist im Gehäuse ein Steckdosengehäuse angeordnet und ist die Abdeckung oder mindestens ein Verschluss für eine Öffnung an dem Steckdosengehäuse fixiert.

Nach einer zusätzlichen vorteilhaften Ausgestaltung des erfindungsgemäßen Einbaugehäuses weist das Steckdosengehäuse mindestens eine Vertiefung zur Aufnahme des mindestens einen Verschlusses auf.

Nach einer zusätzlichen vorteilhaften Ausgestaltung des erfindungsgemäßen Einbaugehäuses ist das Steckdosengehäuse in mindestens eine Drehrichtung drehbar im Gehäuse angeordnet. Dadurch besteht auch die Möglichkeit, dass vor oder nach der Betätigung der Bedienvorrichtung ein Verwender eine von ihm benötigte Steckdose, einen von ihm benötigten Informationsanschluss oder einen von ihm benötigten Schalter an eine Position verdrehen kann, in der die ausgewählte Steckdose, der ausgewählte Informationsanschluss oder der ausgewählte Schalter durch eine Öffnung der Abdeckung zugänglich ist.

Nach einer zusätzlichen vorteilhaften Ausgestaltung des erfindungsgemäßen Einbaugehäuses weist das Steckdosengehäuse mindestens einen Antrieb auf, der eine Drehbewegung der Abdeckung und/oder des mindestens einen Verschlusses und/oder des Steckdosengehäuses beim Öffnen und/oder beim Verschließen mindestens einer Öffnung in mindestens eine Drehrichtung unterstützt.

Nach einer diesbezüglichen vorteilhaften Ausgestaltung des erfindungsgemäßen Einbaugehäuses ist mindestens ein Antrieb ein manuell betriebener Antrieb, ein Federmechanismus oder ein Elektroantrieb.

Nach einer zusätzlichen vorteilhaften Ausgestaltung des erfindungsgemäßen Einbaugehäuses ist mindestens ein Federmechanismus vor der Betätigung der Bedienvorrichtung zumindest teilweise gespannt.

Nach einer zusätzlichen vorteilhaften Ausgestaltung des erfindungsgemäßen Einbaugehäuses ist die Abdeckung an der Gehäusewandung fixiert.

Nach einer zusätzlichen vorteilhaften Ausgestaltung des erfindungsgemäßen Einbaugehäuses ist die Abdeckung einteilig und unter Beibehaltung der Drehfähigkeit der Abdeckung mittels mindestens einer Verriegelungsvorrichtung mit dem Gehäuse verbunden und/oder ist die Abdeckung mehrteilig, wobei unter Beibehaltung der Drehfähigkeit der Abdeckung mindestens ein Teil der Abdeckung mittels mindestens einer Verriegelungsvorrichtung mit dem Gehäuse verbunden ist.

Nach einer zusätzlichen vorteilhaften Ausgestaltung des erfindungsgemäßen Einbaugehäuses ist die Abdeckung mehrteilig ist, wobei unter Beibehaltung der Drehfähigkeit der Abdeckung mindestens ein Teil der Abdeckung mittels mindestens einer Verriegelungsvorrichtung mit dem Gehäuse verbunden ist, wobei zumindest einer dieser Teile der Abdeckung lösbar mittels mindestens einer Verriegelungsvorrichtung mit mindestens einem anderen dieser Teile der Abdeckung und/oder dem Gehäuse und/oder dem Steckdosengehäuse verbunden ist.

Nach einer zusätzlichen vorteilhaften Ausgestaltung des erfindungsgemäßen Einbaugehäuses weist die Abdeckung eine Deckelscheibe und/oder eine Führung auf. Bevorzugt steht der Antrieb mit der Führung in Wirkverbindung.

Nach einer zusätzlichen vorteilhaften Ausgestaltung des erfindungsgemäßen Einbaugehäuses ist die Führung auf einer dem Innenraum zugewandten Seite der Abdeckung angeordnet.

Nach einer zusätzlichen vorteilhaften Ausgestaltung des erfindungsgemäßen Einbaugehäuses ist die Führung lösbar an dem restlichen Teil der Abdeckung angeordnet. Bevorzugt ist die Führung lösbar an der Deckelscheibe angeordnet.

Nach einer zusätzlichen vorteilhaften Ausgestaltung des erfindungsgemäßen Einbaugehäuses weist die Führung zumindest teilweise einen Zahnkranz auf. Bevorzugt steht der Federmechanismus mit dem Zahnkranz in Wirkverbindung.

Nach einer zusätzlichen vorteilhaften Ausgestaltung des erfindungsgemäßen Einbaugehäuses ist mindestens eine Verriegelungsvorrichtung an dem Gehäuse angeordnet.

Nach einer diesbezüglichen vorteilhaften Ausgestaltung des erfindungsgemäßen Einbaugehäuses ist mindestens eine Verriegelungsvorrichtung durch eine durch einen Verschluss verschließbare Öffnung bedienbar. Somit muss die Öffnung zumindest etwas geöffnet sein, damit ein Verwender durch die Öffnung hindurch die Verriegelungsvorrichtung bedienen kann.

Nach einer zusätzlichen vorteilhaften Ausgestaltung des erfindungsgemäßen Einbaugehäuses weist die Abdeckung eine Nut und/oder einen Schlitz auf. Die Nut und/oder der Schlitz sind in Wirkverbindung mit einer Verriegelungsvorrichtung bringbar. Somit kann zum Verriegeln der Abdeckung an dem Gehäuse ein Riegel in eine an der Abdeckung angeordneten Nut und/oder in einen an der Abdeckung angeordneten Schlitz geschoben werden.

Nach einer zusätzlichen vorteilhaften Ausgestaltung des erfindungsgemäßen Einbaugehäuses ist mindestens eine Steckdose, mindestens ein Informationsanschluss und/oder mindestens ein Schalter als auswechselbarer Einsatz ausgestaltet. Bevorzugt wird ein auswechselbarer Einsatz in dem Gehäuse verklipst und/oder verschraubt. Durch einen auswechselbaren Einsatz kann das erfindungsgemäße Einbaugehäuse an die Bedürfnisse des Verwenders angepasst werden.

Nach einer vorteilhaften Ausgestaltung des erfindungsgemäßen Verfahrens zur Bedienung eines Einbaugehäuses zum Einbau in ein Möbel, eine Wand, einen Boden und/oder eine Decke, wobei das Einbaugehäuse ein mindestens teilweise geschlossenes Gehäuse, das eine eine Außenseite aufweisende Gehäusewandung und eine die Außenseite nicht überragende Abdeckung oder eine die Außenseite zumindest stellenweise überragende Abdeckung aufweist, wobei das Gehäuse mindestens einen Innenraum aufweist, der durch die Gehäusewandung zugänglich und von der Abdeckung abgedeckt ist, wobei die Abdeckung eine dem Innenraum abgewandte Oberseite und mindestens eine durch einen Verschluss verschließbare Öffnung aufweist, wobei mindestens ein Verschluss mittels einer Bedienvorrichtung aus einer Verschlussstellung in eine Offenstellung bzw. aus einer Offenstellung in eine Verschlussstellung bewegbar ist, wobei mindestens ein Verschluss durch Betätigung einer Bedienvorrichtung, die zumindest teilweise außerhalb der Gehäusewandung des Gehäuses angeordnet ist, direkt oder indirekt aus der Verschlussstellung in die Offenstellung bzw. aus der Offenstellung in die Verschlussstellung bewegt wird, wobei ein in der Verschlussstellung befindlicher Verschluss zumindest teilweise innerhalb der durch den Verschluss verschließbaren Öffnung angeordnet ist, und/oder mehrere Verschlüsse durch Betätigung einer gemeinsamen Bedienvorrichtung, die zumindest teilweise außerhalb der Gehäusewandung des Gehäuses angeordnet ist, direkt oder indirekt aus der Verschlussstellung in die Offenstellung bzw. aus der Offenstellung in die Verschlussstellung bewegt werden, wobei ein in der Verschlussstellung befindlicher Verschluss zumindest teilweise innerhalb der durch den Verschluss verschließbaren Öffnung angeordnet ist, und/oder mehrere Verschlüsse durch Betätigung mindestens zweier Bedienvorrichtungen, von denen mindestens eine Bedienvorrichtung zumindest teilweise außerhalb des Gehäuses angeordnet ist, direkt und/oder indirekt aus der Verschlussstellung in die Offenstellung bzw. aus der Offenstellung in die Verschlussstellung bewegt werden, wobei ein in der Verschlussstellung befindlicher Verschluss zumindest teilweise innerhalb der durch den Verschluss verschließbaren Öffnung angeordnet ist, wobei eine Bedienvorrichtung, die zumindest teilweise außerhalb des Gehäuses angeordnet ist, über die Außenseite der Gehäusewandung radial hervorsteht und/oder über die Oberseite der Abdeckung hervorsteht und/oder eine Bedienvorrichtung, die zumindest teilweise außerhalb des Gehäuses angeordnet ist, zumindest ein Teil der Abdeckung, der die Außenseite der Gehäusewandung zumindest stellenweise radial überragt, und/oder eine Bedienvorrichtung, die zumindest teilweise außerhalb des Gehäuses angeordnet ist, radial die Außenseite der Gehäusewandung überragend an der Abdeckung angeordnet ist, weist mindestens eine Öffnung eine die Öffnung verschließende Sperrstellung und eine die Öffnung freigebende Freigabestellung auf, wobei zum Wechsel zwischen der Sperrstellung und der Freigabestellung bzw. der Freigabestellung und der Sperrstellung die Abdeckung und/oder mindestens ein Verschluss und/oder ein Steckdosengehäuse bewegt werden.

Nach einer zusätzlichen vorteilhaften Ausgestaltung des erfindungsgemäßen Verfahrens ist die Bewegung der Abdeckung und/oder des mindestens einen Verschlusses und/oder des Steckdosengehäuses zumindest zeitweise eine in mindestens eine Drehrichtung verlaufende Drehbewegung. Bevorzugt wird die Abdeckung und/oder mindestens ein Verschluss und/oder das Steckdosengehäuse durch Betätigung einer mit der Abdeckung und/oder mindestens einem Verschluss und/oder dem Steckdosengehäuse zusammenwirkenden Bedienvorrichtung in eine andere Position verdreht.

Nach einer zusätzlichen vorteilhaften Ausgestaltung des erfindungsgemäßen Verfahrens wird die Bewegung der Abdeckung und/oder des mindestens einen Verschlusses und/oder des Steckdosengehäuses mindestens in eine Drehrichtung zumindest zeitweise durch einen Antrieb unterstützt.

Nach einer diesbezüglichen vorteilhaften Ausgestaltung des erfindungsgemäßen Verfahrens ist mindestens ein in mindestens eine Drehrichtung eingesetzter Antrieb ein manuell betriebener Antrieb, ein Federmechanismus oder ein Elektroantrieb.

Nach einer zusätzlichen vorteilhaften Ausgestaltung des erfindungsgemäßen Verfahrens wird bei Bewegung der Abdeckung und/oder des mindestens einen Verschlusses und/oder des Steckdosengehäuses in mindestens eine Drehrichtung mindestens ein Federmechanismus zumindest teilweise gespannt und/oder zumindest teilweise entspannt. Somit ist der Einsatz eines Einbaugehäuses denkbar, bei dem durch Betätigung einer Bedienvorrichtung eine Abdeckung und/oder mindestens ein Verschluss und/oder das Steckdosengehäuse federunterstützt (automatisch) aus einer die Öffnung verschließende Sperrstellung in eine die Öffnung freigebende Freigabestellung gebracht wird, um eine dadurch zumindest teilweise entspannte Feder durch manuelle Verbringung der Abdeckung und/oder des mindestens einen Verschlusses und/oder des Steckdosengehäuses aus der die Öffnung freigebende Freigabestellung in eine die Öffnung verschließende Sperrstellung zumindest teilweise zu spannen. Denkbar ist auch der Einsatz eines Einbaugehäuses, bei dem durch Betätigung einer Bedienvorrichtung eine Abdeckung und/oder mindestens ein Verschluss und/oder das Steckdosengehäuse federunterstützt (automatisch) aus einer die Öffnung freigebende Freigabestellung in eine die Öffnung verschließende Sperrstellung gebracht wird, um eine dadurch zumindest teilweise entspannte Feder durch eine manuelle Verbringung der Abdeckung und/oder mindestens eines Verschlusses und/oder des Steckdosengehäuses aus der die Öffnung verschließenden Sperrstellung in eine die Öffnung freigebende Freigabestellung zumindest teilweise zu spannen.

Nach einer zusätzlichen vorteilhaften Ausgestaltung des erfindungsgemäßen Verfahrens wird nach der erstmaligen Betätigung der Bedienvorrichtung, durch den die Abdeckung und/oder mindestens ein Verschluss und/oder das Steckdosengehäuse in eine Drehrichtung bewegt wird, mindestens durch eine erneute Betätigung der Bedienvorrichtung die Abdeckung und/oder mindestens ein Verschluss und/oder das Steckdosengehäuse in die selbe Drehrichtung bewegt. Dadurch ist ein stufenweises Weiterschalten der Abdeckung, mindestens eines Verschlusses und/oder des Steckdosengehäuses gewährleistet.

Nach einer zusätzlichen vorteilhaften Ausgestaltung des erfindungsgemäßen Verfahrens ist die Abdeckung, mindestens ein Teil der Abdeckung, mindestens ein Verschluss und/oder mindestens ein Einsatz austauschbar. Somit können die Abdeckung, mindestens ein Teil der Abdeckung und/oder mindestens ein Verschluss designtechnisch an die Umgebung angepasst werden bzw. nach einer eventuelle Beschädigung ausgetauscht werden. Die Abdeckung, mindestens ein Teil der Abdeckung und/oder mindestens ein Verschluss werden somit insbesondere für den Verwender zum austauschbaren Ersatzteil. Durch den Austausch eines Einsatzes, der bevorzugt in dem Gehäuse verklipst und/oder verschraubt wird, ist das erfindungsgemäße Einbaugehäuse an die technischen Bedürfnisse des Verwenders anpassbar.

Nach einer zusätzlichen vorteilhaften Ausgestaltung des erfindungsgemäßen Verfahrens wird als Einbaugehäuse ein Einbaugehäuse, gemäß einem der Ansprüche 1 bis 16, eingesetzt.

Weitere Vorteile und vorteilhafte Ausgestaltungen der Erfindung sind der nachfolgenden Beschreibung und den Zeichnungen entnehmbar.

### Zeichnungen

Ein bevorzugtes Ausführungsbeispiel des erfindungsgemäßen Gegenstands ist in den Zeichnungen dargestellt und wird m Folgenden näher erläutert. Es zeigen
- Fig. 1: eine perspektivische Darstellung eines erfindungsgemäßen Einbaugehäuses im geschlossenen Zustand,
- Fig. 2: eine perspektivische Darstellung des erfindungsgemäßen Einbaugehäuses im geöffneten Zustand,
- Fig. 3: eine Unteransicht des erfindungsgemäßen Einbaugehäuses,
- Fig. 4: eine perspektivische Explosionsdarstellung des erfindungsgemäßen Einbaugehäuses,
- Fig. 5: eine weitere perspektivische Explosionsdarstellung des erfindungsgemäßen Einbaugehäuses von oben,
- Fig. 6: eine perspektivische Explosionsdarstellung des erfindungsgemäßen Einbaugehäuses von unten,
- Fig. 7: eine weitere perspektivische Explosionsdarstellung des erfindungsgemäßen Einbaugehäuses von unten,
- Fig. 8: eine perspektivische Explosionsdarstellung des erfindungsgemäßen Einbaugehäuses von oben,
- Fig. 9: eine perspektivische Explosionsdarstellung des erfindungsgemäßen Einbaugehäuses von unten,
- Fig. 10: eine perspektivische Darstellung des erfindungsgemäßen Einbaugehäuses von unten,
- Fig. 11: eine Aufsicht auf ein erfindungsgemäßes Einbaugehäuse,
- Fig. 12: eine perspektivische Schnittansicht eines erfindungsgemäßen Einbaugehäuses,
- Fig. 13: eine weitere perspektivische Schnittansicht eines erfindungsgemäßen Einbaugehäuses,
- Fig. 14: eine perspektivische Darstellung eines erfindungsgemäßen Einbaugehäuses im geöffneten Zustand,
- Fig. 15: eine perspektivische Explosionsdarstellung des erfindungsgemäßen Einbaugehäuses von oben, gemäß Fig. 14,
- Fig. 16: eine perspektivische Explosionsdarstellung des erfindungsgemäßen Einbaugehäuses von unten, gemäß Fig. 14,
- Fig. 17: eine Explosionsdarstellung einer Seitenansicht des erfindungsgemäßen Einbaugehäuses, gemäß Fig. 14,
- Fig. 18: eine Draufsicht des erfindungsgemäßen Einbaugehäuses von oben, gemäß Fig. 14,
- Fig. 19: eine Seitenansicht des erfindungsgemäßen Einbaugehäuses, gemäß Fig. 14,
- Fig. 20: eine Ansicht des erfindungsgemäßen Einbaugehäuses von unten, gemäß Fig. 14,
- Fig. 21: eine perspektivische Ansicht des erfindungsgemäßen Einbaugehäuses von unten, gemäß Fig. 14,
- Fig. 22: eine Draufsicht eines erfindungsgemäßen Einbaugehäuses im geschlossenen Zustand,
- Fig. 23: eine Seitenansicht des erfindungsgemäßen Einbaugehäuses, gemäß Fig. 22,
- Fig. 24: eine Ansicht des erfindungsgemäßen Einbaugehäuses von unten, gemäß Fig. 22,
- Fig. 25: eine Schnittansicht des erfindungsgemäßen Einbaugehäuses an der Linie A - A, gemäß Fig. 22, und
- Fig. 26: eine Seitenansicht des erfindungsgemäßen Einbaugehäuses an der Linie B - B, gemäß Fig. 22.

### Beschreibung des Ausführungsbeispiels

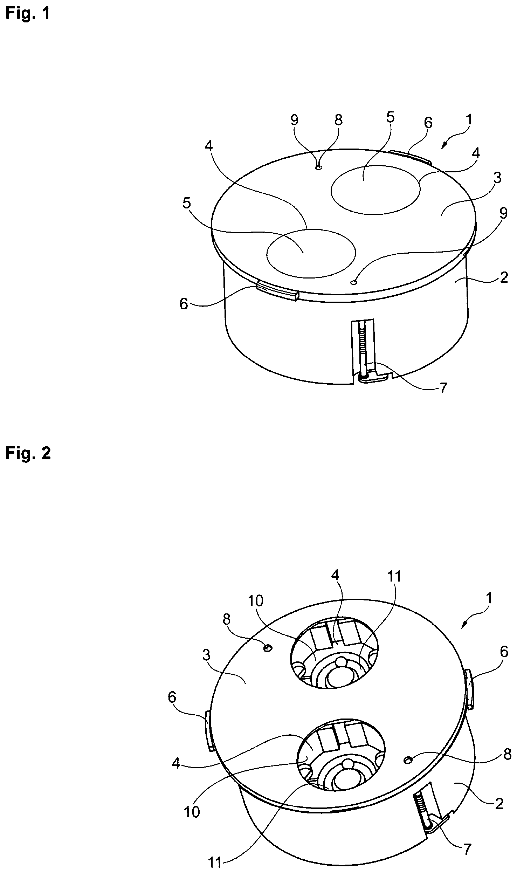

Fig. 1 zeigt eine perspektivische Darstellung eines erfindungsgemäßen Einbaugehäuses 1 im geschlossenen Zustand. Dieses weist eine Gehäusewandung 2 auf, die an ihrer nach oben gerichteten Seite mit einer Abdeckung 3 (Abdeckscheibe) abgedeckt ist. Die Abdeckung 3 (Abdeckscheibe), die an der Gehäusewandung 2 fixiert ist, weist Öffnungen 4 auf, die durch Verschlüsse 5 verschlossen sind. Die Verschlüsse 5 sind jeweils mit einer Bedienvorrichtung, die ein Bedienelement 6 aufweist, oder mit einer gemeinsamen Bedienvorrichtung, die mindestens ein Bedienelement 6 aufweist, verbunden, so dass sie sich, wenn die Bedienvorrichtung betätigt wird, nach unten und damit aus der Öffnung 4 bzw. den Öffnungen 4 heraus bewegen und verdreht werden können. Das erfindungsgemäße Einbaugehäuse 1 kann somit nicht versehentlich geöffnet werden, da ein Verschluss 5 erst verdreht werden kann, wenn die dementsprechende Bedienvorrichtung betätigt wurde. Bevorzugt ist die Bedienvorrichtung eine mechanisch auslösbare Bedienvorrichtung. Das erfindungsgemäße Einbaugehäuse 1 wird, nachdem es beispielsweise in eine in einer Tischplatte angeordneten Bohrung eingeführt wurde, durch Anziehen von Befestigungselementen 7, die eine Fixierung des erfindungsgemäßen Einbaugehäuses 1 von oben ermöglichen, an der Tischplatte fixiert. Im geschlossenen Zustand weist das erfindungsgemäße Einbaugehäuse 1 eine geschlossene Oberfläche auf, so dass ein Zugang 8 zu einem Befestigungselement 7 durch einen Verschluss 9 verschlossen ist. Durch die geschlossene Oberfläche ist das erfindungsgemäße Einbaugehäuse 1 im geschlossenen Zustand vor einem möglichen Wassereintritt geschützt.

Vorteilhaft ist die minimale Einbautiefe des erfindungsgemäßen Einbaugehäuse 1, das durch Betätigung der Bedienvorrichtung und dem Verdrehen der Verschlüsse 5 bevorzugt stufenlos in zwei Endpositionen, nämlich einem geöffneten Zustand (Offenstellung, in der z.B. eine Steckdose bedienbar ist, da sich der Verschluss 5 in seiner die Öffnung 4 freigebende Freigabestellung befindet) und einem geschlossenen Zustand (Verschlussstellung, in der z.B. eine Steckdose abgedeckt ist, da sich der Verschluss 5 in seiner die Öffnung 4 verschließende Sperrstellung befindet) bringbar ist. Bevorzugt ist die Abdeckung 3 derart ausgestaltet, dass sie im verschlossenen Zustand dicht ist, so dass kein Dreck oder Feuchtigkeit in das Innere des erfindungsgemäßen Einbaugehäuse 1 eindringen kann. Dadurch ist das erfindungsgemäße Einbaugehäuse 1 abwischbar. Bevorzugt hat das erfindungsgemäße Einbaugehäuse 1, das auf der Arbeitsplatte, in der es nur ein kleines Bohrloch von beispielsweise 105 mm benötigt, plan aufliegt und das Bohrloch mit einem Kragen überragt, einen sehr flachen Aufbau, der eine Tischplatte beispielsweise um nur z.B. 3 mm überragt, so dass sie nur wenige mm aufträgt. Durch die geringe Einbautiefe (z.B. 40 mm) ist das erfindungsgemäße Einbaugehäuse 1 z.B. in Küchenarbeitsplatten komplett versenkbar und somit auch über Schubladen einsetzbar. Selbstverständlich kann das erfindungsgemäße Einbaugehäuse 1 auch in Wände, Decken oder Böden eingebaut werden.

Fig. 2 zeigt eine perspektivische Darstellung des erfindungsgemäßen Einbaugehäuses 1 im geöffneten Zustand, in dem die Verschlüsse 5 weggedreht wurden, wodurch Steckdosen 10 die Zugänge 8 zu den Befestigungselementen 7 zugänglich sind, so dass Stecker in die Dosentöpfe eingesteckt werden können. Bevorzugt weist das erfindungsgemäße Einbaugehäuse 1 in den Dosentöpfen Steckereinführhilfen 11 auf.

Denkbar wäre auch, dass mindestens eine Steckdose 10 als drehbare Steckdose 10 und/oder als wechselbarer Einsatz ausgestaltet ist.

Statt herkömmlichen Steckdosen 10 (z.B. Doppelsteckdose) sind selbstverständlich auch andere Dosen, die als auswechselbarer Einsatz ausgestaltet sein können, beispielsweise für Informationsanschlüsse (z.B. LAN-Dose), PC-Anschlüsse, TV-Anschlüsse (z.B. Scart-Anschlüsse), Lautsprecher, Schalter, odgl. denkbar. Selbstverständlich sind auch Kombinationen von diesen denkbar, so dass beispielsweise eine Einfachsteckdose mit einem Medienanschlussfeld für Bauteile, wie z.B. USB, computerübliche Anschlüsse, KAT-Buchsen, HDMI, ausgerüstet sein kann.

Das erfindungsgemäße Einbaugehäuse 1 kann aus unterschiedlichen Materialien gefertigt sein, so dass z.B. eine Küchenausführung in hochwertiger Zinkdruckguss Abdeckung in Edelstahl-Optik und eine Officeausführung in eloxierter Optik hergestellt wird.

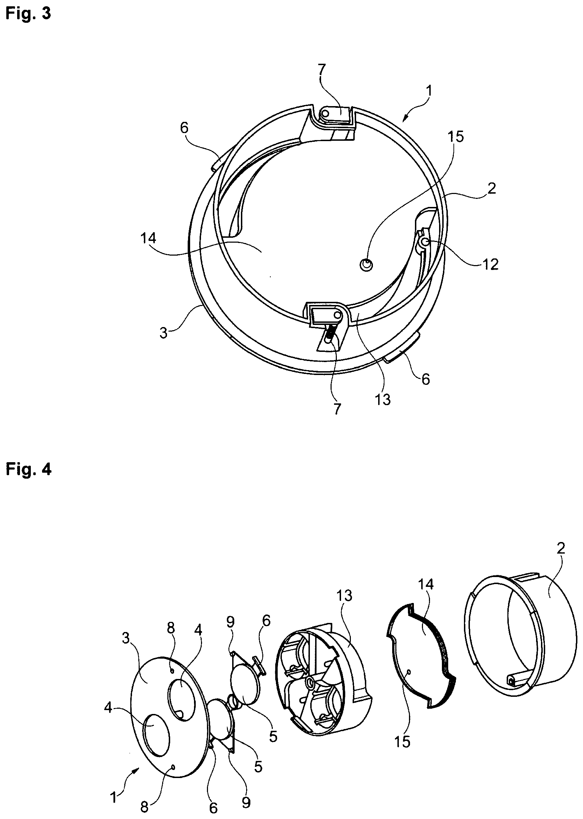

Fig. 3 zeigt eine Unteransicht des erfindungsgemäßen Einbaugehäuses 1. Die Gehäusewandung 2 ist bevorzugt von unten mittels mindestens einer in einer Schraubenführung 12 geführten Schraube an der Abdeckung 3 fixiert. Die Dosentöpfe sind in einem Steckdosengehäuse 13 angeordnet, das nach unten hin durch einen Steckdosenboden 14 verschlossen ist. Im Falle eines Flüssigkeitseintritts in das Steckdosengehäuse 13 dient mindestens ein Wasserablauf 15 zur Ableitung der in das Steckdosengehäuse 13 eingetretenen Flüssigkeit.

Fig. 4 zeigt eine perspektivische Explosionsdarstellung des erfindungsgemäßen Einbaugehäuses 1. An den Verschlüssen 5 sind die Verschlüsse 9 und die Bedienelemente 6 angeordnet, wodurch sich ein Schaltarm 16 (Abdeckarm) bildet. Der Schaltarm 16 ist mit dem Steckdosengehäuse 13, an dem der Steckdosenboden 14 fixiert ist, verbunden. Umschlossen wird diese Einheit von der Gehäusewandung 2, die an der Abdeckung 3 fixiert ist.

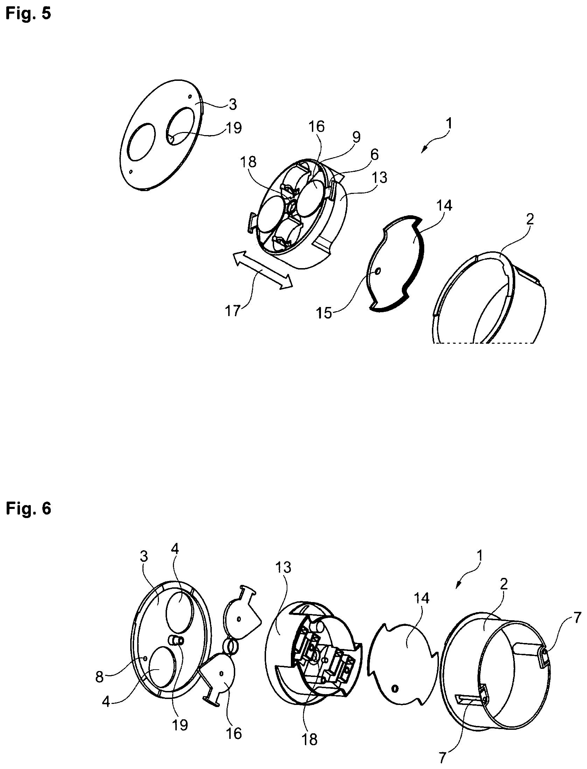

Fig. 5 zeigt eine weitere perspektivische Explosionsdarstellung des erfindungsgemäßen Einbaugehäuses 1 von oben. Der Schaltarm 16 wird mit zwei nicht dargestellten Druckfedern in das Steckdosengehäuse 13 eingelegt und ist nur in der angezeigten Pfeilrichtung 17, also axial, beweglich. Mittels einer Schraube 18, die in einen an der Abdeckung 3 angeordneten Anschraubbolzen 19 einschraubbar ist, wird das Steckdosengehäuse 13 nebst dem darin eingelegten Schaltarm 16 an der feststehenden Abdeckung 3 drehbar befestigt. Nach der Fixierung des Gehäusebodens 14 an dem Steckdosengehäuse 13 wird die Gehäusewandung 2 an der Abdeckung 3 fixiert, bevorzugt von unten verschraubt. Letztendlich bilden die Gehäusewandung 2 und die Abdeckung 3 eine Einheit, innerhalb der sich durch Betätigung eines am Schaltarm 16 angeordneten Bedienelements 6 das Steckdosengehäuse 13 verdrehen lässt. Der Schaltarm 16 und das Steckdosengehäuse 13 bilden somit zusammen die Bedienvorrichtung.

Fig. 6 zeigt eine perspektivische Explosionsdarstellung des erfindungsgemäßen Einbaugehäuses 1 von unten. An dem Anschraubbolzen 19 der oberen feststehenden Abdeckung 3 wird das Steckdosengehäuse 13 drehbar verbunden, wobei der Schaltarm 16 mit den nicht dargestellten zwei Druckfedern, mit dessen Hilfe das Steckdosengehäuse 13 verdreht werden kann und der nur in axialer Richtung beweglich ist, dazwischen eingebaut ist.

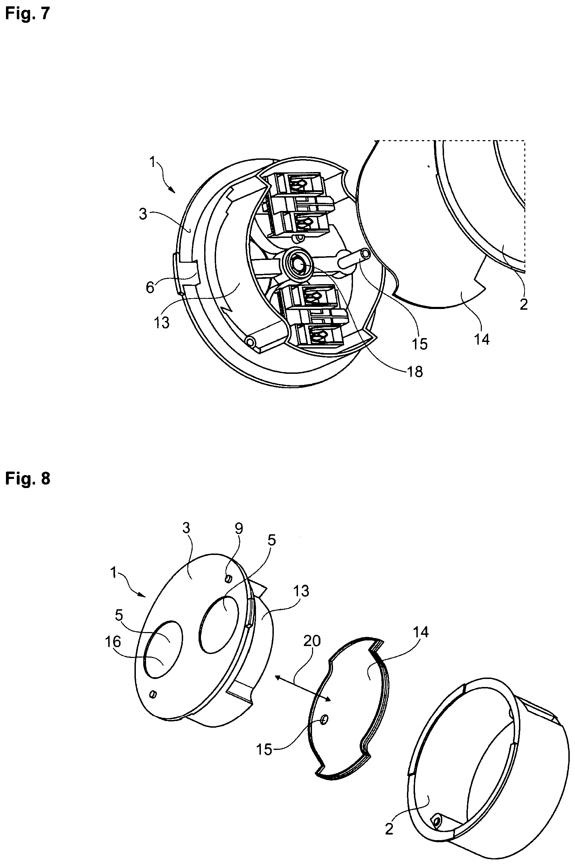

Fig. 7 zeigt eine weitere perspektivische Explosionsdarstellung des erfindungsgemäßen Einbaugehäuses 1 von unten. Mit der Schraube 18 wird das Steckdosengehäuse 13 mit der feststehenden Abdeckung 3 drehbar verschraubt.

Fig. 8 zeigt eine perspektivische Explosionsdarstellung des erfindungsgemäßen Einbaugehäuses 1 von oben. Der Steckdosenboden 14 wird in Pfeilrichtung 20 an dem Steckdosengehäuse 13 angeordnet und mit diesem verschraubt.

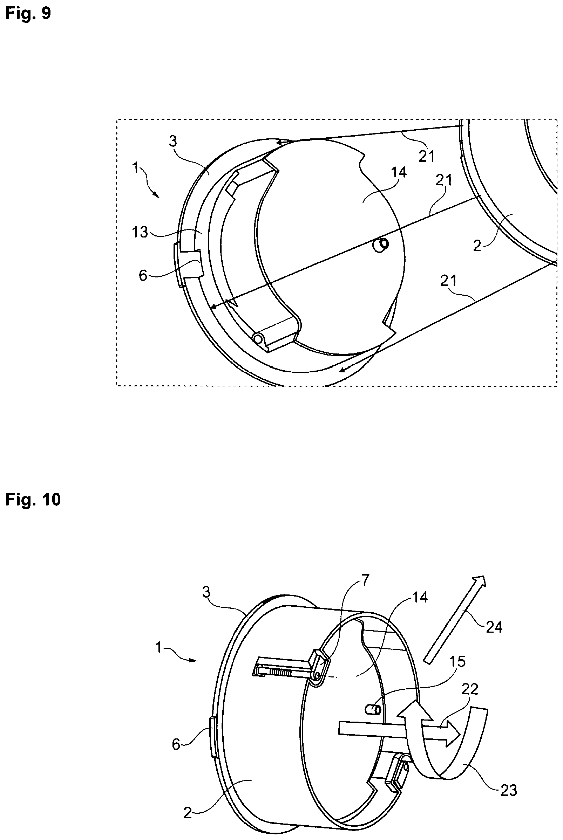

Fig. 9 zeigt eine perspektivische Explosionsdarstellung des erfindungsgemäßen Einbaugehäuses 1 von unten. Die Gehäusewandung 2 wird in Pfeilrichtung 21 an der Abdeckung 3 angeordnet und mit dieser verschraubt.

Fig. 10 zeigt eine perspektivische Darstellung des erfindungsgemäßen Einbaugehäuses 1 von unten. Eine nicht dargestellte Zuleitung, die beispielsweise eine Stromzuleitung sein kann, wird im Inneren des Steckdosengehäuses 13 zugentlastet in axialer Richtung nach hinten durch den Steckdosenboden 14 in Pfeilrichtung 22 herausgeführt und mit einer Schlaufe in Pfeilrichtung 23 in radialer Richtung abgehend an einer nicht dargestellten Zugentlastung am äußeren Gehäuse erneut befestigt. Somit ist eine Verdrehung des Steckdosengehäuses 13 gut möglich und die Zuleitung wird parallel zur Tischunterseite in Pfeilrichtung 24 weggeführt.

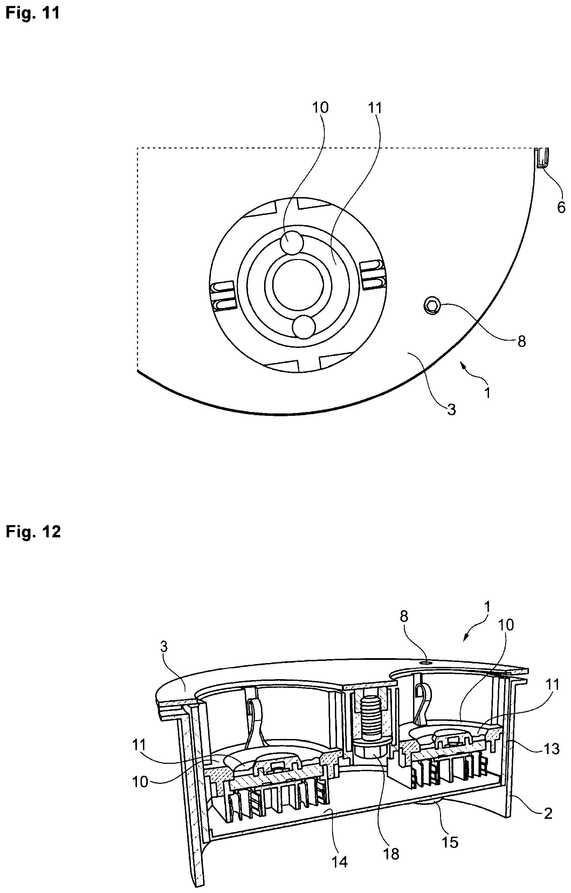

Fig. 11 zeigt eine Aufsicht auf ein erfindungsgemäßes Einbaugehäuse 1. Das Einführen eines Steckers wird durch die Steckereinführhilfe 11 erleichtert.

Fig. 12 zeigt eine perspektivische Schnittansicht eines erfindungsgemäßen Einbaugehäuses 1.

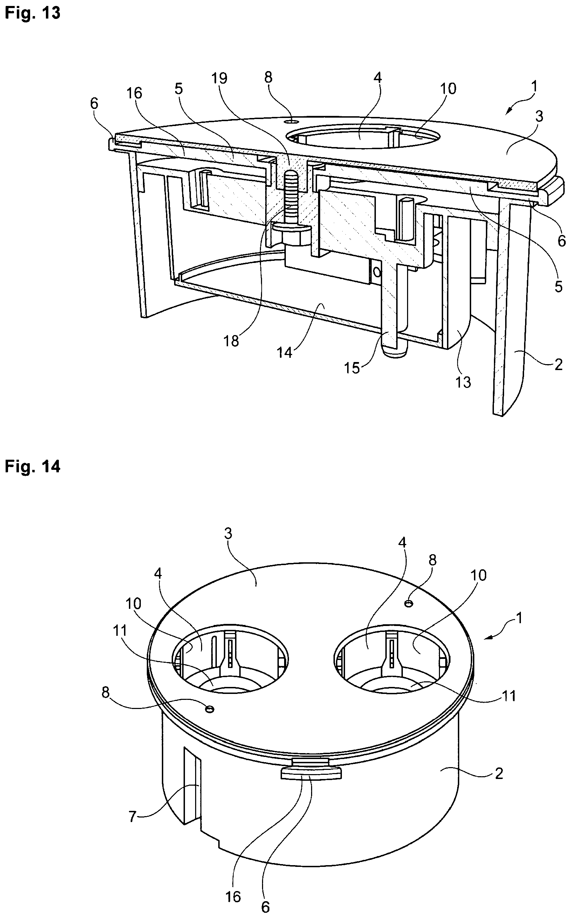

Fig. 13 zeigt eine weitere perspektivische Schnittansicht eines erfindungsgemäßen Einbaugehäuses 1.

Fig. 14 zeigt eine perspektivische Darstellung eines erfindungsgemäßen Einbaugehäuses 1 im geöffneten Zustand.

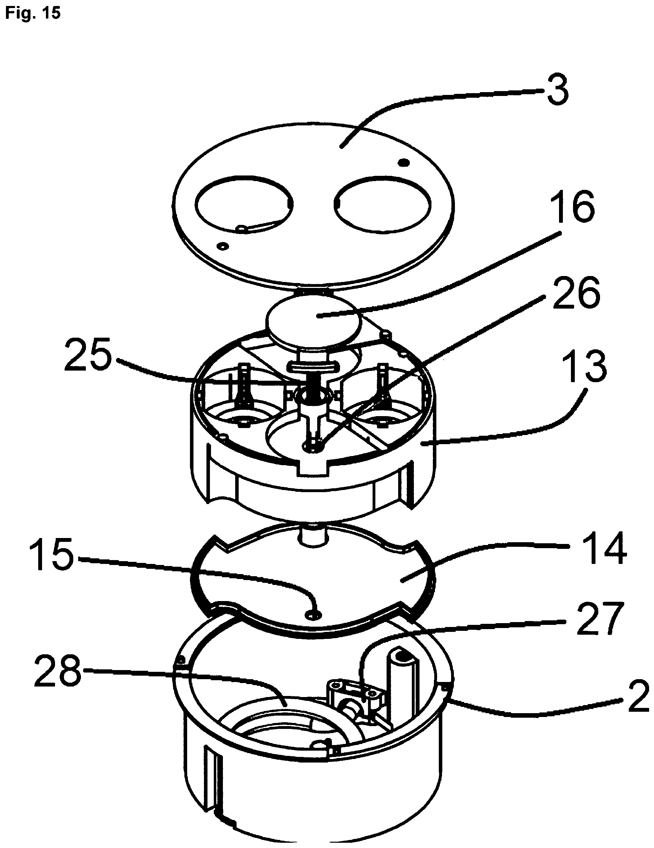

Fig. 15 zeigt eine perspektivische Explosionsdarstellung des erfindungsgemäßen Einbaugehäuses 1 von oben, gemäß Fig. 14. Druckfedern 25 des Schaltarms 16 werden in Druckfedernhalterungen 26 gehalten. Eine Zugentlastung 27 am äußeren Gehäuse sichert eine Leitungsschlaufe 28 einer Leitung. Selbstverständlich können auch mehrere Leitungen aus dem Inneren des Steckdosengehäuses 13 herausgeführt werden.

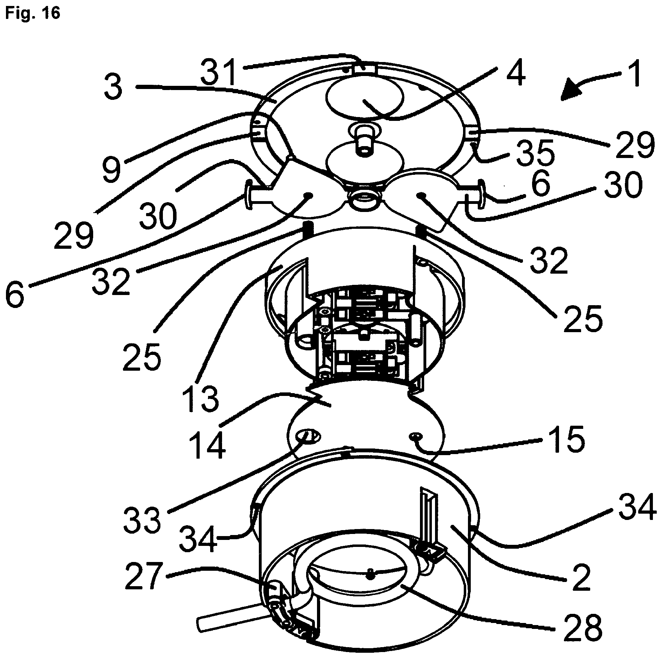

Fig. 16 zeigt eine perspektivische Explosionsdarstellung des erfindungsgemäßen Einbaugehäuses 1 von unten, gemäß Fig. 14. Die Abdeckung 3 weist eine Unterseite auf, an der Vertiefungen 29, in die Rastbereiche 30 des Schaltarms 16 in einer Offenstellung des erfindungsgemäßen Einbaugehäuses 1 einrasten können, und Vertiefungen 31, in die Rastbereiche 30 des Schaltarms 16 in einer Geschlossenstellung (Verschlussstellung) des erfindungsgemäßen Einbaugehäuses 1 einrasten können, angeordnet sind. Denkbar wäre auch, dass der Bereich zwischen der Vertiefungen 31 und der Vertiefungen 29 zumindest anfänglich kontinuierlich ansteigt, wodurch der Verschluss 5 und/oder der Verschluss 9 durch eine federunterstützte Absenkung des Schaltarms 16 aus der Öffnung 4 und/oder dem Zugang 8 herausführbar ist. Der Steckdosenboden 14 weist mindestens eine Öffnung 33 auf, durch die mindestens eine Leitung aus dem Inneren des Steckdosengehäuses 13 herausgeführt werden können. Am Flansch der Gehäusewandung 2 sind Öffnungen 34 angeordnet, durch die nicht dargestellte Schrauben führbar sind, um die Gehäusewandung 2 an Stellen 35 der Abdeckung 3 mit der Abdeckung zu verschrauben.

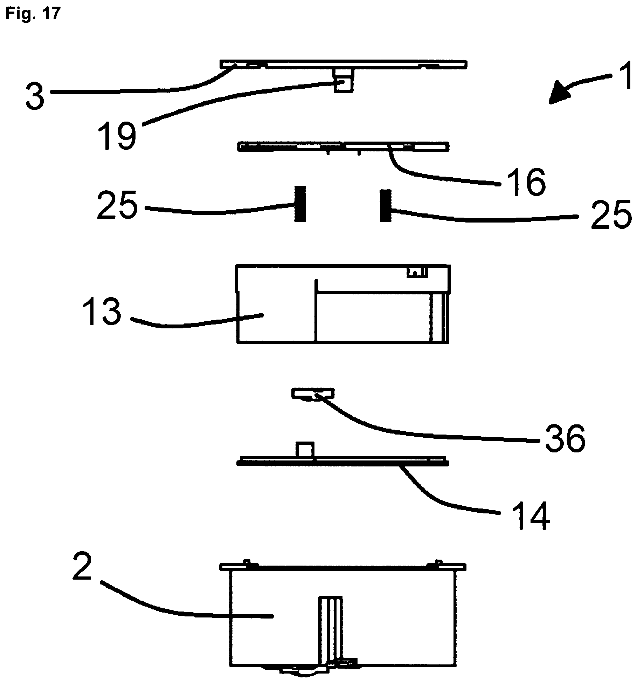

Fig. 17 zeigt eine Explosionsdarstellung einer Seitenansicht des erfindungsgemäßen Einbaugehäuses 1, gemäß Fig. 14. Bevorzugt ist im Inneren des Steckdosengehäuses 13 eine Zugentlastung 36 angeordnet.

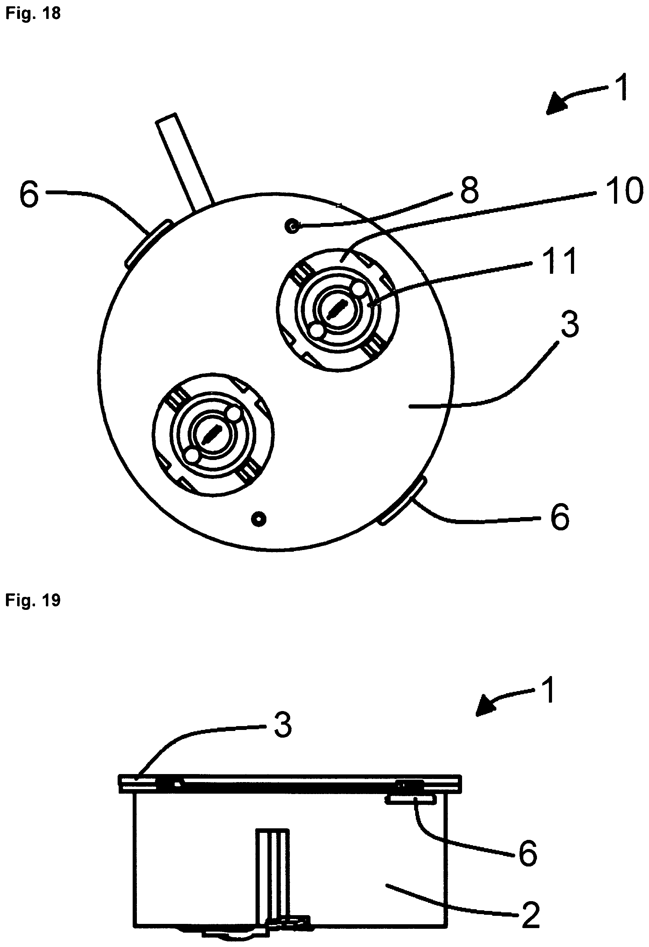

Fig. 18 zeigt eine Draufsicht des erfindungsgemäßen Einbaugehäuses 1 von oben, gemäß Fig. 14. Deutlich erkennbar ist, dass, da das Bedienelement 6 außerhalb der Gehäusewandung 2 angeordnet ist, der Schaltarm 16 zumindest teilweise außerhalb der Gehäusewandung 2 angeordnet ist.

Fig. 19 zeigt eine Seitenansicht des erfindungsgemäßen Einbaugehäuses 1, gemäß Fig. 14.

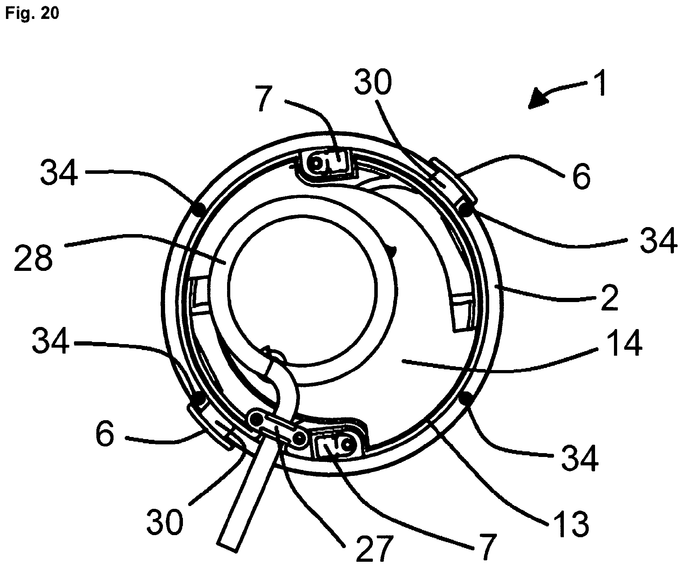

Fig. 20 zeigt eine Ansicht des erfindungsgemäßen Einbaugehäuses 1 von unten, gemäß Fig. 14.

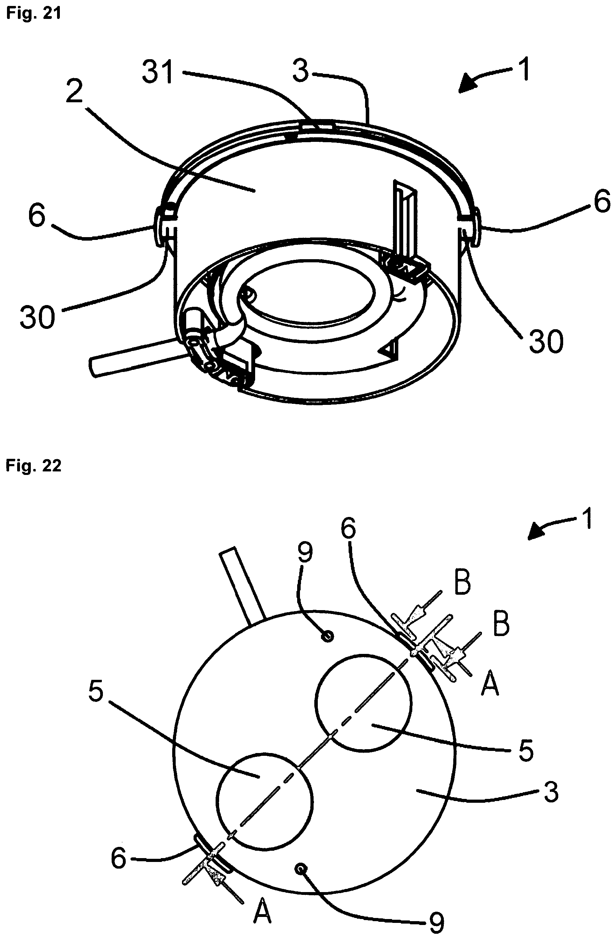

Fig. 21 zeigt eine perspektivische Ansicht des erfindungsgemäßen Einbaugehäuses 1 von unten, gemäß Fig. 14.

Fig. 22 zeigt eine Draufsicht eines erfindungsgemäßen Einbaugehäuses 1 im geschlossenen Zustand.

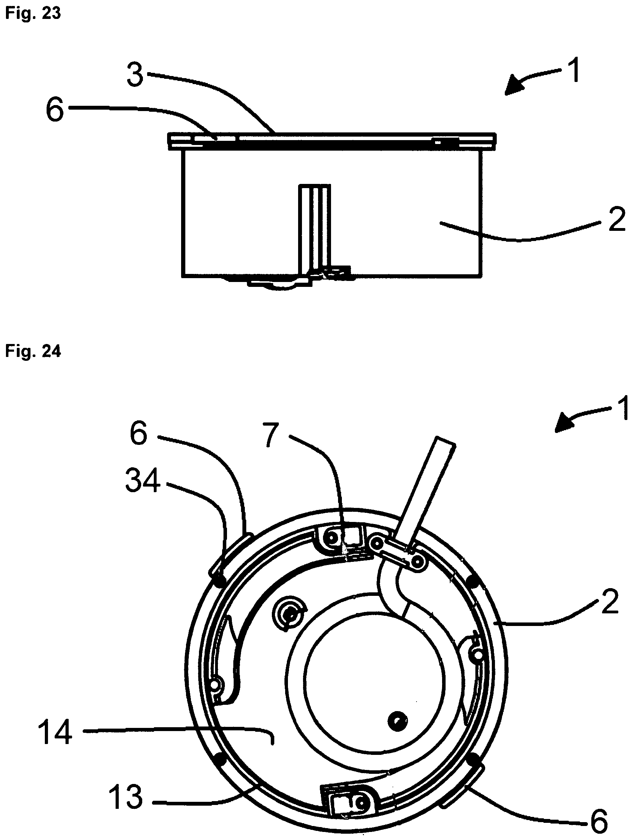

Fig. 23 zeigt eine Seitenansicht des erfindungsgemäßen Einbaugehäuses 1, gemäß Fig. 22.

Fig. 24 zeigt eine Ansicht des erfindungsgemäßen Einbaugehäuses 1 von unten, gemäß Fig. 22.

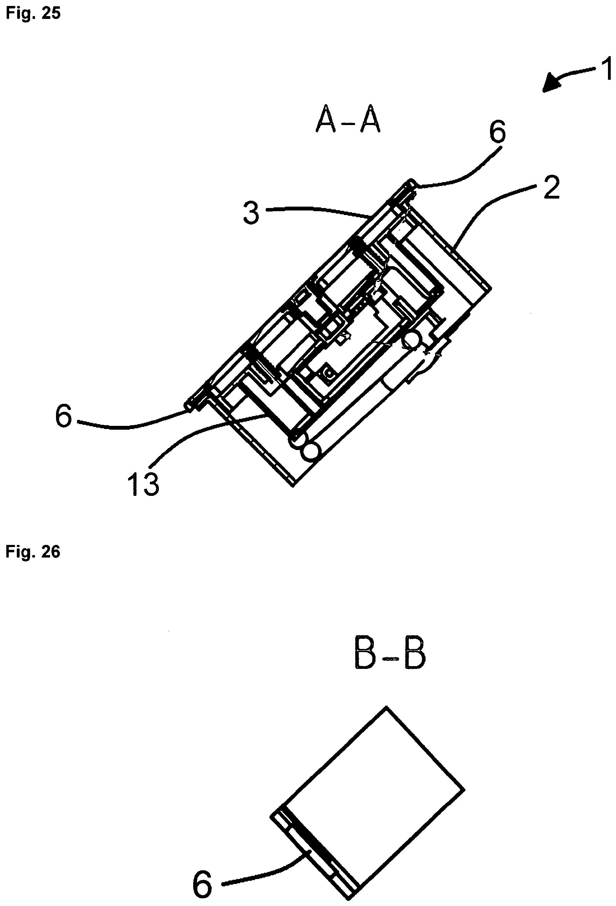

Fig. 25 zeigt eine Schnittansicht des erfindungsgemäßen Einbaugehäuses 1 an der Linie A - A, gemäß Fig. 22.

Fig. 26 zeigt eine Seitenansicht des erfindungsgemäßen Einbaugehäuses 1 an der Linie B - B, gemäß Fig. 22.

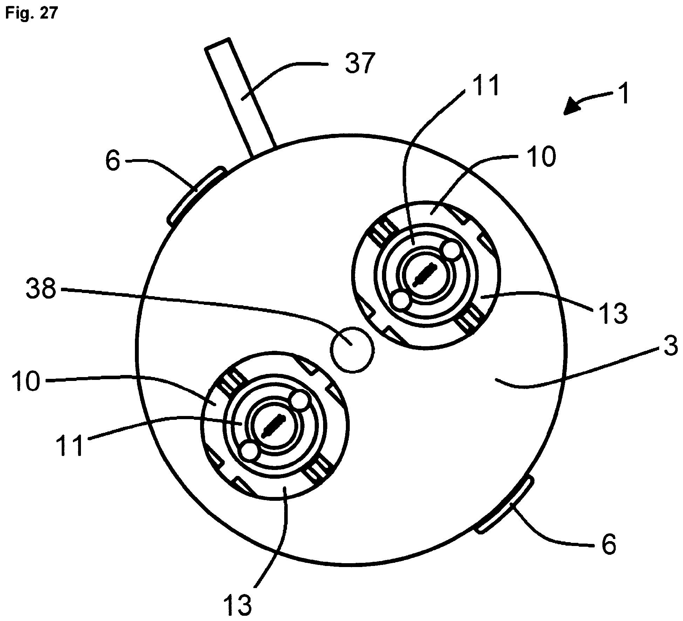

Fig. 27 zeigt eine Draufsicht eines weiteren Ausführungsbeispiels eines erfindungsgemäßen Einbaugehäuses 1, das eine Zuleitung 37 aufweist. Bei diesem Ausführungsbeispiel weist das erfindungsgemäße Einbaugehäuse 1 zusätzlich zu der Bedienvorrichtung, die die Bedienelemente 6 aufweist, eine weitere Bedienvorrichtung, die einen Betätigungsknopf 38 aufweist, auf. Je nach Ausführung kann durch ein Betätigen der Bedienvorrichtung, die die Bedienelemente 6 aufweist, die Abdeckung 3, mindestens ein Verschluss 5 oder, sofern ein Steckdosengehäuse 13 vorhanden ist, das Steckdosengehäuse 13 oder das Steckdosengehäuse 13 nebst mindestens eines Verschlusses 5 verdreht werden. Zusätzlich kann je nach Ausführung durch ein Betätigen der Bedienvorrichtung, die den Betätigungsknopf 38 aufweist, die Abdeckung 3, mindestens ein Verschluss 5 oder, sofern ein Steckdosengehäuse 13 vorhanden ist, das Steckdosengehäuse 13 oder das Steckdosengehäuse 13 nebst mindestens eines Verschlusses 5 verdreht werden. Denkbar ist auch, dass die beiden Bedienelemente 6 zwei unterschiedlichen Bedienvorrichtungen zugeordnet sind, so dass beispielsweise durch das eine Bedienelement 6 die Abdeckung 3 und durch das andere Bedienelement 6 mindestens ein Verschluss 5 verdrehbar ist. Denkbar ist auch, dass das das Steckdosengehäuse 13 in sich verdrehbar ist, so dass durch das eine Bedienelement 6 ein oberer Teil des das Steckdosengehäuses 13 und durch das andere Bedienelement 6 ein unterer Teil des das Steckdosengehäuses 13 verdrehbar ist. Denkbar ist auch, dass der Betätigungsknopf 38 zumindest teilweise außerhalb des Gehäuses angeordnet ist und/oder, das die Bedienvorrichtung, die einen Betätigungsknopf 38 aufweist, die einzige Bedienvorrichtung des erfindungsgemäßen Einbaugehäuses 1 darstellt.

Neben den Ausführungen, insbesondere der Ausführung, dass sich das Steckdosengehäuse 13 verdrehen lässt, ist es bei dem erfindungsgemäßen Einbaugehäuse 1 auch denkbar, dass der Schaltarm 16 derart an dem Steckdosengehäuse 13 angeordnet ist, dass das Steckdosengehäuse 13 bei Betätigung des Schaltarms 16 erst verzögert in Drehung versetzt wird und/oder vor dem Ende des Betätigungsvorganges wieder zum Stillstand kommt.

Denkbar ist auch, dass die Betätigung einer Bedienvorrichtung ein Verdrehen des Steckdosengehäuses 13 nebst einem an diesem fixierten Verschluss 5 bewirkt und die Betätigung einer anderen Bedienvorrichtung ein Verdrehen eines mit dieser in Verbindung stehenden Verschlusses 5 bewirkt.

Denkbar ist auch, dass das erfindungsgemäße Einbaugehäuse 1 mindestens eine Bedienvorrichtung nebst Drehmechanismus (Kugelschreiberprinzip, Wendelgänge, Elektromotor) aufweist, wie sie in der Offenlegungsschrift DE 10 2018 009 948 A1 beschrieben ist, mit dem Unterschied, dass der dort beschriebene Betätigungsknopf zumindest teilweise außerhalb des Innenraums angeordnet ist. Abgesehen von dieser Abweichung werden die in der Offenlegungsschrift DE 10 2018 009 948 A1 offenbarten Merkmale für das erfindungsgemäße Einbaugehäuse 1 als offenbart angesehen.

Denkbar ist auch, dass der in der Offenlegungsschrift DE 10 2018 009 948 A1 offenbarte Betätigungsknopf bei der erfindungsgemäßen Einbaudose 1, die eine durch die Abdeckung 3 verlaufende Längsachse aufweist, unterhalb der Abdeckung 3 angeordnet ist, nämlich z.B. der Abdeckung 3 zugewandt oder dem Steckdosenboden 14 zugewandt oder der Abdeckung 3 abgewandt, und die in der Offenlegungsschrift DE 10 2018 009 948 A1 beschriebenen Bedienvorrichtungsvarianten nebst Drehmechanismen (Kugelschreiberprinzip, Wendelgänge, Elektromotor) durch einen Schaltarm 16 betätigt werden. Z.B. könnte durch eine schräge Oberfläche des Betätigungsknopfes, der bedingt durch eine Führung nicht verdreht werden kann, und eine mit dieser schrägen Oberfläche korrespondierenden an dem Schaltarm 16 angeordneten schrägen Oberfläche eine Drehbewegung des Schaltarms 16 in eine parallel oder auf der Längsachse verlaufenden axialen Bewegung führen, wodurch eine Verdrehung des oder der Verschlüsse bewirkt wird.

Denkbar ist auch, dass eine Bedienvorrichtung eine Drehbewegung der Abdeckung 3 auslöst, so dass mindestens ein Verschluss 5 direkt oder indirekt mittels dieser Bedienvorrichtung aus einer Verschlussstellung in eine Offenstellung bzw. aus einer Offenstellung in eine Verschlussstellung bewegbar ist. Unabhängig davon, ob sich die Abdeckung 3 verdrehen lässt oder nicht, ist es von Vorteil, wenn die Abdeckung 3 mittels mindestens einer Verriegelungsvorrichtung lösbar an der Gehäusewandung 2 angeordnet ist.

Denkbar ist auch, dass eine Bedienvorrichtung eine Drehbewegung mindestens eines Verschlusses 5 auslöst, so dass mindestens ein Verschluss 5 direkt oder indirekt mittels dieser Bedienvorrichtung aus einer Verschlussstellung in eine Offenstellung bzw. aus einer Offenstellung in eine Verschlussstellung bewegbar ist. In diesem Fall würde bevorzugt kein verdrehbares Steckdosengehäuse 13 zum Einsatz kommen.

Alle in der Beschreibung, den nachfolgenden Ansprüchen und den Zeichnungen dargestellten Merkmale können sowohl einzeln als auch in beliebiger Kombination miteinander erfindungswesentlich sein.

### Bezugszahlenliste

- 1: Einbaugehäuse
- 2: Gehäusewandung
- 3: Abdeckung
- 4: Öffnung
- 5: Verschluss
- 6: Bedienelement
- 7: Befestigungselement
- 8: Zugang
- 9: Verschluss
- 10: Steckdose
- 11: Steckereinführungshilfe
- 12: Schraubenführung
- 13: Steckdosengehäuse
- 14: Steckdosenboden
- 15: Wasserablauf
- 16: Schaltarm
- 17: Pfeilrichtung
- 18: Schraube
- 19: Anschraubbolzen
- 20: Pfeilrichtung
- 21: Pfeilrichtung
- 22: Pfeilrichtung
- 23: Pfeilrichtung
- 24: Pfeilrichtung
- 25: Druckfeder
- 26: Druckfederhalterung
- 27: Zugentlastung
- 28: Leitungsschlaufe
- 29: Vertiefung
- 30: Rastbereich
- 31: Vertiefung
- 32: Druckfederhalterung
- 33: Öffnung
- 34: Öffnung
- 35: Stelle
- 36: Zugentlastung
- 37: Zuleitung
- 38: Betätigungsknopf

## Patentansprüche

1. Einbaugehäuse (1) zum Einbau in ein Möbel, eine Wand, einen Boden und/oder eine Decke,
- mit einem mindestens teilweise geschlossenen Gehäuse, das eine eine Außenseite aufweisende Gehäusewandung (2) und eine die Außenseite nicht überragende Abdeckung (3) oder eine die Außenseite zumindest stellenweise überragende Abdeckung (3) aufweist, wobei das Gehäuse mindestens einen Innenraum aufweist, der von außerhalb zugänglich und von der Abdeckung (3) abgedeckt ist, wobei die Abdeckung (3) eine dem Innenraum abgewandte Oberseite und mindestens eine durch einen Verschluss (5) verschließbare Öffnung (4) aufweist, wobei mindestens ein Verschluss (5) mittels einer Bedienvorrichtung aus einer Verschlussstellung in eine Offenstellung bzw. aus einer Offenstellung in eine Verschlussstellung bewegbar ist,
**dadurch gekennzeichnet,**
**dass** mindestens ein Verschluss (5) durch eine Bedienvorrichtung, die zumindest teilweise außerhalb der Gehäusewandung (2) des Gehäuses angeordnet ist, aus der Verschlussstellung in die Offenstellung bzw. aus der Offenstellung in die Verschlussstellung bewegbar ist, wobei ein in der Verschlussstellung befindlicher Verschluss (5) zumindest teilweise innerhalb der durch den Verschluss (5) verschließbaren Öffnung (4) angeordnet ist,
oder
mehrere Verschlüsse (5) durch eine gemeinsame Bedienvorrichtung, die zumindest teilweise außerhalb der Gehäusewandung (2) des Gehäuses angeordnet ist, aus der Verschlussstellung in die Offenstellung bzw. aus der Offenstellung in die Verschlussstellung bewegbar sind, wobei ein in der Verschlussstellung befindlicher Verschluss (5) zumindest teilweise innerhalb der durch den Verschluss (5) verschließbaren Öffnung (4) angeordnet ist,
oder
mehrere Verschlüsse (5) durch mindestens zwei Bedienvorrichtungen, von denen mindestens eine Bedienvorrichtung zumindest teilweise außerhalb des Gehäuses angeordnet ist, aus der Verschlussstellung in die Offenstellung bzw. aus der Offenstellung in die Verschlussstellung bewegbar sind, wobei ein in der Verschlussstellung befindlicher Verschluss (5) zumindest teilweise innerhalb der durch den Verschluss (5) verschließbaren Öffnung (4) angeordnet ist,
wobei
eine Bedienvorrichtung, die zumindest teilweise außerhalb des Gehäuses angeordnet ist, über die Außenseite der Gehäusewandung (2) radial hervorsteht oder über die Oberseite der Abdeckung (3) hervorsteht
oder
eine Bedienvorrichtung, die zumindest teilweise außerhalb des Gehäuses angeordnet ist, zumindest ein Teil der Abdeckung (3) ist, der die Außenseite der Gehäusewandung (2) zumindest stellenweise radial überragt,
oder
eine Bedienvorrichtung, die zumindest teilweise außerhalb des Gehäuses angeordnet ist, radial die Außenseite der Gehäusewandung (2) überragend an der Abdeckung (3) angeordnet ist.

2. Einbaugehäuse (1), nach Anspruch 1,
**dadurch gekennzeichnet,**
**dass** mindestens eine Öffnung (4) eine die Öffnung (4) verschließende Sperrstellung und eine die Öffnung (4) freigebende Freigabestellung aufweist.

3. Einbaugehäuse (1), nach Anspruch 1 oder Anspruch 2,
**dadurch gekennzeichnet,**
**dass** mindestens ein Verschluss und/oder mindestens eine Bedienvorrichtung eine Feder aufweist.

4. Einbaugehäuse (1), nach einem der vorhergehenden Ansprüche,
**dadurch gekennzeichnet,**
**dass** in mindestens einem Innenraum mindestens eine Steckdose (7) und/oder mindestens ein Informationsanschluss odgl. und/oder mindestens ein Schalter und/oder ein Steckdosengehäuse (13), das mindestens eine Steckdose (7) und/oder mindestens einen Informationsanschluss odgl. und/oder mindestens einen Schalter aufweist, untergebracht ist.

5. Einbaugehäuse (1), nach einem der vorhergehenden Ansprüche,
**dadurch gekennzeichnet,**
**dass** in mindestens einem Innenraum ein Steckdosengehäuse (13), das mindestens eine Steckdose (7) und/oder mindestens einen Informationsanschluss odgl. und/oder mindestens einen Schalter aufweist, untergebracht ist, wobei das Steckdosengehäuse (13) eine Bedienvorrichtung aufweist.

6. Einbaugehäuse (1), nach einem der vorhergehenden Ansprüche,
**dadurch gekennzeichnet,**
**dass** die Abdeckung (3) und/oder mindestens ein Verschluss (5) und/oder ein Steckdosengehäuse (13) in mindestens einer Drehrichtung um eine Drehachse drehbar ist.

7. Einbaugehäuse (1), nach einem der vorhergehenden Ansprüche,
**dadurch gekennzeichnet,**
**dass** die Abdeckung (3) auf ihrer dem Innenraum zugewandten Seite mindestens eine Vertiefung (29) zur Aufnahme eines Verschlusses (5) aufweist und/oder im Innenraum mindestens eine Vertiefung (31) zur Aufnahme eines Verschlusses (5) angeordnet ist.

8. Einbaugehäuse (1), nach einem der vorhergehenden Ansprüche,
**dadurch gekennzeichnet,**
**dass** das Einbaugehäuse (1) mindestens einen Antrieb aufweist, der die Drehbewegung der Abdeckung (3) und/oder des mindestens einen Verschlusses (5) und/oder des Steckdosengehäuses (13) beim Öffnen und/oder beim Verschließen mindestens einer Öffnung (4) in mindestens eine Drehrichtung unterstützt.

9. Einbaugehäuse (1), nach einem der vorhergehenden Ansprüche,
**dadurch gekennzeichnet,**
**dass** im Gehäuse ein Steckdosengehäuse angeordnet ist und die Abdeckung (3) oder mindestens ein Verschluss (5) für eine Öffnung (4) an dem Steckdosengehäuse (13) fixiert ist.

10. Einbaugehäuse (1), nach einem der vorhergehenden Ansprüche,
**dadurch gekennzeichnet,**
**dass** die Abdeckung (3) an der Gehäusewandung (2) fixiert ist.

11. Einbaugehäuse (1), nach einem der vorhergehenden Ansprüche,
**dadurch gekennzeichnet,**
**dass** die Abdeckung (3) einteilig und unter Beibehaltung der Drehfähigkeit der Abdeckung (3) mittels mindestens einer Verriegelungsvorrichtung mit dem Gehäuse verbunden ist und/oder die Abdeckung (3) mehrteilig ist, wobei unter Beibehaltung der Drehfähigkeit der Abdeckung (3) mindestens ein Teil der Abdeckung (3) mittels mindestens einer Verriegelungsvorrichtung mit dem Gehäuse verbunden ist.

12. Einbaugehäuse (1), nach einem der vorhergehenden Ansprüche,
**dadurch gekennzeichnet,**
**dass** die Abdeckung (3) mehrteilig ist, wobei unter Beibehaltung der Drehfähigkeit der Abdeckung (3) mindestens ein Teil der Abdeckung (3) mittels mindestens einer Verriegelungsvorrichtung mit dem Gehäuse verbunden ist, wobei zumindest einer dieser Teile der Abdeckung (3) lösbar mittels mindestens einer Verriegelungsvorrichtung mit mindestens einem anderen dieser Teile der Abdeckung (3) und/oder dem Gehäuse und/oder dem Steckdosengehäuse verbunden ist.

13. Einbaugehäuse (1), nach einem der vorhergehenden Ansprüche,
**dadurch gekennzeichnet,**
**dass** die Abdeckung (3) eine Deckelscheibe und/oder eine Führung aufweist.

14. Einbaugehäuse (1), nach einem der vorhergehenden Ansprüche,
**dadurch gekennzeichnet,**
**dass** mindestens eine Verriegelungsvorrichtung an dem Gehäuse angeordnet ist.

15. Einbaugehäuse (1), nach einem der vorhergehenden Ansprüche,
**dadurch gekennzeichnet,**
**dass** die Abdeckung (3) eine Nut und/oder einen Schlitz aufweist.

16. Einbaugehäuse (1), nach einem der vorhergehenden Ansprüche,
**dadurch gekennzeichnet,**
**dass** mindestens eine Steckdose und/oder mindestens ein Informationsanschluss und/oder mindestens ein Schalter als auswechselbarer Einsatz ausgestaltet ist.

17. Verfahren zur Bedienung eines Einbaugehäuses (1) zum Einbau in ein Möbel, eine Wand, einen Boden und/oder eine Decke, wobei das Einbaugehäuse (1) ein mindestens teilweise geschlossenes Gehäuse, das eine eine Außenseite aufweisende Gehäusewandung (2) und eine die Außenseite nicht überragende Abdeckung (3) oder eine die Außenseite zumindest stellenweise überragende Abdeckung (3) aufweist, wobei das Gehäuse mindestens einen Innenraum aufweist, der von außerhalb zugänglich und von der Abdeckung (3) abgedeckt ist, wobei die Abdeckung (3) eine dem Innenraum abgewandte Oberseite und mindestens eine durch einen Verschluss (5) verschließbare Öffnung (4) aufweist, wobei mindestens ein Verschluss (5) mittels einer Bedienvorrichtung aus einer Verschlussstellung in eine Offenstellung bzw. aus einer Offenstellung in eine Verschlussstellung bewegbar ist,
**dadurch gekennzeichnet,**
**dass** mindestens ein Verschluss (5) durch Betätigung einer Bedienvorrichtung, die zumindest teilweise außerhalb der Gehäusewandung (2) des Gehäuses angeordnet ist, aus der Verschlussstellung in die Offenstellung bzw. aus der Offenstellung in die Verschlussstellung bewegt wird, wobei ein in der Verschlussstellung befindlicher Verschluss (5) zumindest teilweise innerhalb der durch den Verschluss (5) verschließbaren Öffnung (4) angeordnet ist,
und/oder
mehrere Verschlüsse (5) durch Betätigung einer gemeinsamen Bedienvorrichtung, die zumindest teilweise außerhalb der Gehäusewandung (2) des Gehäuses angeordnet ist, aus der Verschlussstellung in die Offenstellung bzw. aus der Offenstellung in die Verschlussstellung bewegt werden, wobei ein in der Verschlussstellung befindlicher Verschluss (5) zumindest teilweise innerhalb der durch den Verschluss (5) verschließbaren Öffnung (4) angeordnet ist, und/oder
mehrere Verschlüsse (5) durch Betätigung mindestens zweier Bedienvorrichtungen, von denen mindestens eine Bedienvorrichtung zumindest teilweise außerhalb des Gehäuses angeordnet ist, aus der Verschlussstellung in die Offenstellung bzw. aus der Offenstellung in die Verschlussstellung bewegt werden wobei ein in der Verschlussstellung befindlicher Verschluss (5) zumindest teilweise innerhalb der durch den Verschluss (5) verschließbaren Öffnung (4) angeordnet ist,
wobei
eine Bedienvorrichtung, die zumindest teilweise außerhalb des Gehäuses angeordnet ist, über die Außenseite der Gehäusewandung (2) radial hervorsteht und/oder über die Oberseite der Abdeckung (3) hervorsteht
und/oder
eine Bedienvorrichtung, die zumindest teilweise außerhalb des Gehäuses angeordnet ist, zumindest ein Teil der Abdeckung (3) ist, der die Außenseite der Gehäusewandung (2) zumindest stellenweise radial überragt,
und/oder
eine Bedienvorrichtung, die zumindest teilweise außerhalb des Gehäuses angeordnet ist, radial die Außenseite der Gehäusewandung (2) überragend an der Abdeckung (3) angeordnet ist.

18. Verfahren, nach Anspruch 17,
**dadurch gekennzeichnet,**
**dass** mindestens eine Öffnung (4) eine die Öffnung (4) verschließende Sperrstellung und eine die Öffnung (4) freigebende Freigabestellung aufweist, wobei zum Wechsel zwischen der Sperrstellung und der Freigabestellung bzw. der Freigabestellung und der Sperrstellung die Abdeckung (3) und/oder mindestens ein Verschluss (5) und/oder ein Steckdosengehäuse (13) bewegt werden.

19. Verfahren, nach Anspruch 17 oder Anspruch 18,
**dadurch gekennzeichnet,**
**dass** die Abdeckung (3), mindestens ein Teil der Abdeckung (3), mindestens ein Verschluss (5) und/oder mindestens ein Einsatz austauschbar ist.

20. Verfahren, nach einem der Ansprüche 17 bis 19,
**dadurch gekennzeichnet,**
**dass** als Einbaugehäuse (1) ein Einbaugehäuse (1), gemäß einem der Ansprüche 1 bis 16, eingesetzt wird.

## Claims

1. A flush-mounted socket housing (1) to be incorporated within a piece of furniture, a wall, a floor and/or a ceiling,
- having an at least partially closed housing which has a housing wall (2) having an outer surface and a covering (3) which does not protrude beyond said outer surface or a covering (3) which protrudes beyond said outer surface at least in certain sections, the housing having at least one interior space that is accessible from the outside and is covered by said covering (3), said covering (3) having an upper surface facing away from said interior space and at least one opening (4) closeable by a closure (5), with at least one closure (5) being movable from a closure position into an open position and/or from an open position into a closure position by means of an operating device,
**characterised in that**
at least one closure (5) is movable from the closure position into the open position and/or from the open position into the closure position by means of an operating device which is arranged at least partially outside the housing wall (2) of said housing, wherein a closure (5) in its closure position is at least partially arranged within the opening (4) closeable by said closure (5),
or
several closures (5) are movable from the closure position into the open position and/or from the open position into the closure position by means of a common operating device which is arranged at least partially outside the housing wall (2) of said housing, wherein a closure (5) in its closure position is at least partially arranged within the opening (4) closeable by said closure (5),
or
several closures (5) are movable from the closure position into the open position and/or from the open position into the closure position by means of at least two operating devices of which at least one operating device is arranged at least partially outside the housing, wherein a closure (5) in its closure position is at least partially arranged within the opening (4) closeable by said closure (5),
wherein
an operating device which is arranged at least partially outside the housing protrudes radially beyond the outer surface of the housing wall (2) or protrudes beyond the upper surface of the covering (3),
or
an operating device which is arranged at least partially outside the housing forms at least a part of the covering (3) that, at least in certain sections, protrudes radially beyond the outer surface of the housing wall (2),
or
an operating device which is arranged at least partially outside the housing is arranged on the covering (3) in such a manner as to protrude radially beyond the outer surface of the housing wall (2).

2. The flush-mounted socket housing (1) as claimed in claim 1, **characterised in that**
at least one opening (4) has a locking position closing said opening (4) and a release position granting access to said opening (4).

3. The flush-mounted socket housing (1) as claimed in claim 1 or claim 2, **characterised in that**
at least one closure and/or at least one operating device are provided with a spring.

4. The flush-mounted socket housing (1) as claimed in any of the preceding claims,
**characterised in that**
at least one interior space houses at least one plug socket (7) and/or at least one information socket or the like and/or at least one switch, and/or houses a plug socket housing (13) for accommodating at least one plug socket (7) and/or at least one information socket or the like and/or at least one switch.

5. The flush-mounted socket housing (1) as claimed in any of the preceding claims,
**characterised in that**
at least one interior space houses at least one plug socket housing (13) for accommodating at least one plug socket (7) and/or at least one information socket or the like and/or at least one switch, wherein said plug socket housing (13) has an operating device.

6. The flush-mounted socket housing (1) as claimed in any of the preceding claims,
**characterised in that**
the covering (3) and/or at least one closure (5) and/or a plug socket housing (13) is/are rotatable in at least one sense of rotation about an axis of rotation.

7. The flush-mounted socket housing (1) as claimed in any of the preceding claims,
**characterised in that**
the covering (3) on its side facing towards the interior space has at least one depression (29) for accommodating a closure (5) and/or **in that** at least one depression (31) for accommodating a closure (5) is arranged in the interior space.

8. The flush-mounted socket housing (1) as claimed in any of the preceding claims,
**characterised in that**
the flush-mounted socket housing (1) has at least one drive mechanism that assists the rotary movement of the cover (3) and/or of the at least one closure (5) and/or of the plug socket housing (13) in at least one sense of rotation during release and/or close-off operations of at least one opening (4).

9. The flush-mounted socket housing (1) as claimed in any of the preceding claims,
**characterised in that**
the housing has a plug socket housing arranged therein and **in that** the covering (3) or at least one closure (5) for an opening (4) is fastened to said plug socket housing (13).

10. The flush-mounted socket housing (1) as claimed in any of the preceding claims,
**characterised in that**
the covering (3) is fastened to the housing wall (2).

11. The flush-mounted socket housing (1) as claimed in any of the preceding claims,
**characterised in that**
the covering (3) is made of a single part and is connected to the housing by means of at least one locking device while still maintaining the rotatability of said covering (3), and/or **in that** the covering (3) is made of several parts, with at least one part of the covering (3) being connected to the housing by means of at least one locking device while still maintaining the rotatability of said covering (3).

12. The flush-mounted socket housing (1) as claimed in any of the preceding claims,
**characterised in that**
the covering (3) is made of several parts, with at least one part of the covering (3) being connected to the housing by means of at least one locking device, with at least one of these parts of the covering (3) being releasably connected to at least one other of these parts of the covering (3) and/or of the housing and/or of the plug socket housing by means of at least one locking device, while still maintaining the rotatability of said covering (3).

13. The flush-mounted socket housing (1) as claimed in any of the preceding claims,
**characterised in that**
the covering (3) has a cover disc and/or a guide.

14. The flush-mounted socket housing (1) as claimed in any of the preceding claims,
**characterised in that**
at least one locking device is arranged on the housing.

15. The flush-mounted socket housing (1) as claimed in any of the preceding claims,
**characterised in that**
the covering (3) has a groove and/or a slot.

16. The flush-mounted socket housing (1) as claimed in any of the preceding claims,
**characterised in that**
at least one plug socket and/or at least one information socket and/or at least one switch are each configured as a changeable insert.

17. A method of operating a flush-mounted socket housing (1) to be incorporated within a piece of furniture, a wall, a floor and/or a ceiling, said flush-mounted socket housing (1) having an at least partially closed housing which has a housing wall (2) having an outer surface and a covering (3) which does not protrude beyond said outer surface or a covering (3) which protrudes beyond said outer surface at least in certain sections, the housing having at least one interior space that is accessible from the outside and is covered by said covering (3), said covering (3) having an upper surface facing away from said interior space and at least one opening (4) closeable by a closure (5), with at least one closure (5) being movable from a closure position into an open position and/or from an open position into a closure position by means of an operating device,
**characterised in that**
at least one closure (5) is moved from the closure position into the open position and/or from the open position into the closure position by actuating an operating device which is arranged at least partially outside the housing wall (2) of said housing, wherein a closure (5) in its closure position is at least partially arranged within the opening (4) closeable by said closure (5),
and/or
several closures (5) are moved from the closure position into the open position and/or from the open position into the closure position by actuating a common operating device which is arranged at least partially outside the housing wall (2) of said housing, wherein a closure (5) in its closure position is at least partially arranged within the opening (4) closeable by said closure (5),
and/or
several closures (5) are moved from the closure position into the open position and/or from the open position into the closure position by actuating at least two operating devices of which at least one operating device is arranged at least partially outside the housing, wherein a closure (5) in its closure position is at least partially arranged within the opening (4) closeable by said closure (5),
wherein
an operating device which is arranged at least partially outside the housing protrudes radially beyond the outer surface of the housing wall (2) and/or protrudes beyond the upper surface of the covering (3), and/or
an operating device which is arranged at least partially outside the housing forms at least a part of the covering (3) that, at least in certain sections, protrudes radially beyond the outer surface of the housing wall (2),
and/or
an operating device which is arranged at least partially outside the housing is arranged on the covering (3) in such a manner as to protrude radially beyond the outer surface of the housing wall (2).

18. The method as claimed in claim 17,
**characterised in that**
at least one opening (4) has a locking position closing said opening (4) and a release position granting access to said opening (4), wherein the covering (3) and/or at least one closure (5) and/or a plug socket housing (13) are moved in order to effect a change between the locking position and the release position and/or between the release position and the locking position.

19. The method as claimed in claim 17 or claim 18,
**characterised in that**
the covering (3), at least one part of said covering (3), at least one closure (5) and/or at least one insert are replaceable.

20. The method as claimed in any one of claims 17 to 19,
**characterised in that**
the flush-mounted socket housing (1) utilised here is a flush-mounted socket housing (1) as claimed in any one of claims 1 to 16.

## Revendications

1. Boîtier encastrable (1) destiné à être monté dans un meuble, un mur, un plancher et/ou un plafond,
- pourvu d'un boîtier au moins en partie fermé qui présente une paroi de boîtier (2) présentant une face extérieure et un couvercle (3) ne dépassant pas de la face extérieure ou un couvercle (3) dépassant au moins par endroits de ladite face extérieure, le boîtier présentant au moins un espace intérieur qui est accessible de l'extérieur et qui est recouvert par le couvercle (3), le couvercle (3) présentant une face supérieure opposée à l'espace intérieur et au moins une ouverture (4) pouvant être fermée par un dispositif de fermeture (5), au moins un dispositif de fermeture (5) pouvant passer d'une position de fermeture à une position ouverte et/ou d'une position ouverte à une position de fermeture au moyen d'un dispositif d'actionnement,
**caractérisé en ce que**
il est possible de faire passer au moins un dispositif de fermeture (5) de la position de fermeture à la position ouverte et/ou de la position ouverte à la position de fermeture grâce à un dispositif d'actionnement qui est disposé au moins en partie à l'extérieur de la paroi de boîtier (2) dudit boîtier, un dispositif de fermeture (5) en position de fermeture étant disposé au moins en partie à l'intérieur de l'ouverture (4) pouvant être fermée par le dispositif de fermeture (5),
ou
il est possible de faire passer plusieurs dispositifs de fermeture (5) de la position de fermeture à la position ouverte et/ou de la position ouverte à la position de fermeture grâce à un dispositif d'actionnement commun qui est disposé au moins en partie à l'extérieur de la paroi de boîtier (2) dudit boîtier, un dispositif de fermeture (5) en position de fermeture étant disposé au moins en partie à l'intérieur de l'ouverture (4) pouvant être fermée par le dispositif de fermeture (5),
ou
il est possible de faire passer plusieurs dispositifs de fermeture (5) de la position de fermeture à la position ouverte et/ou de la position ouverte à la position de fermeture grâce à au moins deux dispositifs d'actionnement parmi lesquels au moins un dispositif d'actionnement est disposé au moins en partie à l'extérieur du boîtier, un dispositif de fermeture (5) en position de fermeture étant disposé au moins en partie à l'intérieur de l'ouverture (4) pouvant être fermée par le dispositif de fermeture (5),
un dispositif d'actionnement qui est disposé au moins en partie à l'extérieur du boîtier dépassant radialement de la face extérieure de la paroi de boîtier (2) ou dépassant de la face supérieure du couvercle (3),
ou
un dispositif d'actionnement qui est disposé au moins en partie à l'extérieur du boîtier constituant au moins une partie du couvercle (3) qui dépasse, au moins par endroits, radialement de la face extérieure de la paroi de boîtier (2),
ou
un dispositif d'actionnement qui est disposé au moins en partie à l'extérieur du boîtier étant disposé sur le couvercle (3) de manière à dépasser radialement de la face extérieure de la paroi de boîtier (2).

2. Boîtier encastrable (1) selon la revendication 1,
**caractérisé en ce que**
au moins une ouverture (4) présente une position de blocage qui bloque l'accès à l'ouverture (4)) et une position de libération qui libère l'accès à ladite ouverture (4).

3. Boîtier encastrable (1) selon la revendication 1 ou selon la revendication 2,
**caractérisé en ce que**
au moins un dispositif de fermeture et/ou au moins un dispositif d'actionnement présente(nt) un ressort.

4. Boîtier encastrable (1) selon l'une quelconque des revendications précédentes,
**caractérisé en ce que**
dans au moins un espace intérieur sont logés au moins une prise électrique (7) et/ou au moins un port d'information ou port similaire et/ou au moins un interrupteur et/ou un boîtier de prise électrique (13) qui présente au moins une prise électrique (7) et/ou au moins un port d'information ou port similaire et/ou au moins un interrupteur.

5. Boîtier encastrable (1) selon l'une quelconque des revendications précédentes,
**caractérisé en ce que**
dans au moins un espace intérieur sont logés un boîtier de prise électrique (13) qui présente au moins une prise électrique (7) et/ou au moins un port d'information ou port similaire et/ou au moins un interrupteur, le boîtier de prise électrique (13) présentant un dispositif d'actionnement.

6. Boîtier encastrable (1) selon l'une quelconque des revendications précédentes,
**caractérisé en ce que**
il est possible de faire tourner le couvercle (3) et/ou au moins un dispositif de fermeture (5) et/ou un boîtier de prise électrique (13) dans au moins un sens de rotation autour d'un axe de rotation.

7. Boîtier encastrable (1) selon l'une quelconque des revendications précédentes,
**caractérisé en ce que**
le couvercle (3) présente, sur sa face tournée vers l'espace intérieur, au moins un creux (29) destiné à recevoir un dispositif de fermeture (5), et/ou **en ce que** dans ledit espace intérieur est disposé au moins un creux (31) destiné à recevoir un dispositif de fermeture (5).

8. Boîtier encastrable (1) selon l'une quelconque des revendications précédentes,
**caractérisé en ce que**
ledit boîtier encastrable (1) présente au moins un entraînement qui assiste le mouvement de rotation du couvercle (3) et/ou dudit au moins un dispositif de fermeture (5) et/ou du boîtier de prise électrique (13) dans au moins un sens de rotation lors de l'ouverture et/ou de la fermeture d'au moins une ouverture (4).

9. Boîtier encastrable (1) selon l'une quelconque des revendications précédentes,
**caractérisé en ce que**
un boîtier de prise électrique est disposé dans le boîtier et le couvercle (3) ou au moins un dispositif de fermeture (5) d'une ouverture (4) est fixé au boîtier de prise électrique (13).

10. Boîtier encastrable (1) selon l'une quelconque des revendications précédentes,
**caractérisé en ce que**
le couvercle (3) est fixé à la paroi de boîtier (2).

11. Boîtier encastrable (1) selon l'une quelconque des revendications précédentes,
**caractérisé en ce que**
le couvercle (3) est réalisé en une seule pièce et est relié au boîtier au moyen d'au moins un dispositif de verrouillage tout en conservant la capacité de rotation dudit couvercle (3), et/ou **en ce que** le couvercle (3) est réalisé en plusieurs pièces et au moins une pièce du couvercle (3) est reliée au boîtier au moyen d'au moins un dispositif de verrouillage tout en conservant la capacité de rotation dudit couvercle (3).

12. Boîtier encastrable (1) selon l'une quelconque des revendications précédentes,
**caractérisé en ce que**
le couvercle (3) est réalisé en plusieurs pièces, au moins une pièce du couvercle (3) étant reliée au boîtier au moyen d'au moins un dispositif de verrouillage tout en conservant la capacité de rotation dudit couvercle (3), au moins une desdites pièces du couvercle (3) étant reliée de manière amovible à au moins une autre desdites pièces du couvercle (3) et/ou au boîtier et/ou au boîtier de prise électrique au moyen d'au moins un dispositif de verrouillage.

13. Boîtier encastrable (1) selon l'une quelconque des revendications précédentes,
**caractérisé en ce que**
le couvercle (3) présente un disque de recouvrement et/ou un guide.

14. Boîtier encastrable (1) selon l'une quelconque des revendications précédentes,
**caractérisé en ce que**
au moins un dispositif de verrouillage est disposé sur le boîtier.

15. Boîtier encastrable (1) selon l'une quelconque des revendications précédentes,
**caractérisé en ce que**
le couvercle (3) présente une rainure et/ou une fente.

16. Boîtier encastrable (1) selon l'une quelconque des revendications précédentes,
**caractérisé en ce que**
au moins une prise électrique et/ou au moins un port d'information et/ou au moins un interrupteur sont respectivement conçus en tant qu'inserts échangeables.

17. Procédé permettant d'actionner un boîtier encastrable (1) destiné à être monté dans un meuble, un mur, un plancher et/ou un plafond, le boîtier encastrable (1) présentant un boîtier au moins en partie fermé qui présente une paroi de boîtier (2) présentant une face extérieure et un couvercle (3) ne dépassant pas de la face extérieure ou un couvercle (3) dépassant au moins par endroits de ladite face extérieure, le boîtier présentant au moins un espace intérieur qui est accessible de l'extérieur et qui est recouvert par le couvercle (3), le couvercle (3) présentant une face supérieure opposée à l'espace intérieur et au moins une ouverture (4) pouvant être fermée par un dispositif de fermeture (5), au moins un dispositif de fermeture (5) pouvant passer d'une position de fermeture à une position ouverte et/ou d'une position ouverte à une position de fermeture,
**caractérisé en ce que**
au moins un dispositif de fermeture (5) passe de la position de fermeture à la position ouverte et/ou de la position ouverte à la position de fermeture lors de l'actionnement d'un dispositif d'actionnement qui est disposé au moins en partie à l'extérieur de la paroi de boîtier (2) dudit boîtier, un dispositif de fermeture (5) en position de fermeture étant disposé au moins en partie à l'intérieur de l'ouverture (4) pouvant être fermée par le dispositif de fermeture (5),
et/ou
plusieurs dispositifs de fermeture (5) passent de la position de fermeture à la position ouverte et/ou de la position ouverte à la position de fermeture lors de l'actionnement d'un dispositif d'actionnement commun qui est disposé au moins en partie à l'extérieur de la paroi de boîtier (2) dudit boîtier, un dispositif de fermeture (5) en position de fermeture étant disposé au moins en partie à l'intérieur de l'ouverture (4) pouvant être fermée par ledit dispositif de fermeture (5),
et/ou
plusieurs dispositifs de fermeture (5) passent de la position de fermeture à la position ouverte et/ou de la position ouverte à la position de fermeture lors de l'actionnement d'au moins deux dispositifs d'actionnement parmi lesquels au moins un dispositif d'actionnement est disposé au moins en partie à l'extérieur du boîtier, un dispositif de fermeture (5) en position de fermeture étant disposé au moins en partie à l'intérieur de l'ouverture (4) pouvant être fermée par ledit dispositif de fermeture (5),
un dispositif d'actionnement qui est disposé au moins en partie à l'extérieur du boîtier dépassant radialement de la face extérieure de la paroi de boîtier (2) ou dépassant de la face supérieure du couvercle (3),
et/ou
un dispositif d'actionnement qui est disposé au moins en partie à l'extérieur du boîtier constituant au moins une partie du couvercle (3) qui dépasse, au moins par endroits, radialement de la face extérieure de la paroi de boîtier (2),
et/ou
un dispositif d'actionnement qui est disposé au moins en partie à l'extérieur du boîtier étant disposé sur le couvercle (3) de manière à dépasser radialement de la face extérieure de la paroi de boîtier (2).

18. Procédé selon la revendication 17,
**caractérisé en ce que**
au moins une ouverture (4) présente une position de blocage qui bloque l'accès à l'ouverture (4) et une position de libération qui libère l'accès à ladite ouverture (4), le passage de la position de blocage à la position de libération et/ou de la position de libération à la position de blocage étant obtenu en faisant bouger le couvercle (3) et/ou au moins un dispositif de fermeture (5) et/ou un boîtier de prise électrique (13).

19. Procédé selon la revendication 17 ou selon la revendication 18, **caractérisé en ce que**
le couvercle (3), au moins une partie du couvercle (3) et/ou au moins un dispositif de fermeture (5) et/ou au moins un insert sont remplaçables.

20. Procédé selon l'une quelconque des revendications 17 à 19, **caractérisé en ce que**
le boîtier encastrable (1) utilisé est un boîtier encastrable (1) selon l'une quelconque des revendications 1 à 16.
